# EUROPEAN PATENT APPLICATION

(11) **EP 4 694 454 A1**
(43) Date of publication of application: **11.02.2026**
(21) Application number: 24784433.5
(22) Date of filing: 07.04.2024
(51) Int. Cl.: H04W 72/0446

(54) **UPLINK TRANSMISSION METHOD, AND TERMINAL AND READABLE STORAGE MEDIUM**

(30) Priority: 07.04.2023 CN 202310366148
(71) Applicant: Datang Mobile Communications Equipment Co., Ltd., Beijing 100085 (CN)
(72) Inventor: SONG, Lei, Beijing 100085 (CN); HUANG, Qiuping, Beijing 100085 (CN); GAO, Qiubin, Beijing 100085 (CN)
(74) Representative: dompatent
(86) International application number: PCT/CN2024/086358
(87) International publication number: WO 2024/208351

(57) **Abstract**

The present disclosure provides an uplink transmission method, a user equipment and a readable storage medium. The method includes: obtaining, by a user equipment, parameter information corresponding to multiple physical uplink shared channels (PUSCH), respectively; wherein the parameter information includes at least one of the following: resource set information, a number of transmission layers, priority information, or transmission scheme; determining, by the user equipment, N PUSCHs for transmission from the multiple PUSCHs which are overlapped based on the parameter information; wherein N is an integer greater than or equal to 1.

## Description

### CROSS-REFERENCE TO RELATED APPLICATION

The present application is filed based on and claims the priority of Chinese Application No. 202310366148.6 filed on April 7, 2023, entitled "uplink transmission method, user equipment and readable storage medium", the disclosure of which are incorporated in their entireties by reference herein.

### TECHNICAL FIELD

The present disclosure relates to the field of communication technologies, and in particular, to an uplink transmission method, user equipment and a readable storage medium.

### BACKGROUND

In some scenarios, user equipment may have multiple physical uplink shared channels (PUSCH) for transmission. For example, PUSCH that the user equipment intends to transmit includes dynamic grant (DG)-PUSCH and configured grant (CG)-PUSCH, or the PUSCH that the user equipment intends to transmit includes multiple DG-PUSCHs or multiple CG-PUSCHs. However, the current protocol has not yet clarified how to determine PUSCH actually transmitted by the user equipment from multiple PUSCHs, resulting in poor transmission performance of the user equipment.

### SUMMARY

The present disclosure provides an uplink transmission method, user equipment and a readable storage medium, which can solve the problem of poor transmission performance of the user equipment.

One embodiment of the present disclosure provides an uplink transmission method, including:
obtaining, by a user equipment, parameter information corresponding to multiple physical uplink shared channels (PUSCH), respectively; wherein the parameter information includes at least one of the following: resource set information, a number of transmission layers, priority information, or transmission scheme;
determining, by the user equipment, N PUSCHs for transmission from the multiple PUSCHs which are overlapped based on the parameter information; wherein N is an integer greater than or equal to 1.

In some embodiments, the parameter information includes: resource set information and priority information corresponding to each PUSCH; and the resource set information includes resource set parameters associated with each PUSCH in the multiple PUSCHs;
the determining, by the user equipment, N PUSCHs for transmission from the multiple PUSCHs which are overlapped based on the parameter information, includes:
selecting, by the user equipment, based on the parameter information and according to a first selection rule, N PUSCHs from the multiple PUSCHs for transmission; wherein the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; where the other resource set parameter is a resource set parameter other than the resource set parameter associated with the first PUSCH;
selecting N PUSCHs from PUSCHs of a first priority for transmission; where when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; where the first priority is the highest priority among priorities of the multiple PUSCHs, and N1 is an integer less than N and greater than 1;
maximizing the number of selected PUSCHs; or
maximizing a sum of priority indices of selected PUSCHs.

In some embodiments, the parameter information includes resource set information and a number of transmission layers of each PUSCH, where the resource set information includes resource set parameters associated with each PUSCH in the multiple PUSCHs;
the determining, by the user equipment, N PUSCHs for transmission from the multiple PUSCHs which are overlapped based on the parameter information, includes:
determining, by the user equipment, based on the parameter information and according to a second selection rule, N PUSCHs from the multiple PUSCHs for transmission; where the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

In some embodiments, the second selection rule includes multiple items of: maximizing the number of selected PUSCHs, the total number of transmission layers of selected PUSCHs not exceeding the transmission capability of the user equipment, or maximizing the total number of transmission layers of selected PUSCHs;
the determining, by the user equipment, based on the parameter information and according to a second selection rule, N PUSCHs from the multiple PUSCHs for transmission, includes:
selecting, by the user equipment, N PUSCHs for transmission from the multiple PUSCHs, based on the parameter information and according to the second selection rule as well as a predefined order of multiple items included in the second selection rule.

In some embodiments, the parameter information includes: resource set information, the number of transmission layers of each PUSCH and priority information corresponding to each PUSCH; and the resource set information includes resource set parameters associated with each PUSCH in the multiple PUSCHs;
the determining, by the user equipment, N PUSCHs for transmission from the multiple PUSCHs which are overlapped based on the parameter information, includes:
selecting, by the user equipment, based on the parameter information, a third PUSCH for transmission from the multiple PUSCHs, and selecting a fourth PUSCH for transmission from the multiple PUSCHs;
wherein the third PUSCH includes at least one of the following:
PUSCH with the highest priority;
PUSCH with a resource set parameter of a specific value;
PUSCH with a number of transmission layers of a specific value; or
PUSCH with a specific type;
wherein the fourth PUSCH satisfies a target condition, and the target condition includes at least one of the following conditions:
being different from resource set parameters associated with the third PUSCH;
the number of transmission layers not exceeding a first value, where the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

In some embodiments, the resource set parameters include:
high-layer parameters related to control resource set or SRS resource set index.

In some embodiments, the priority information includes at least one of the following:
a priority index, a first high-layer parameter, and a second high-layer parameter; where the first high-layer parameter is used to indicate that a priority of dynamic grant is lower than a priority of configured grant, and the second high-layer parameter is used to indicate that a priority of dynamic grant is higher than the priority of the configured grant.

In some embodiments, the parameter information includes resource set information and a transmission scheme of each PUSCH, and the resource set information includes an SRS resource set associated with each PUSCH;
the determining, by the user equipment, N PUSCHs for transmission from the multiple PUSCHs which are overlapped based on the parameter information, includes:
when a fifth PUSCH among the multiple PUSCHs overlap with those of other PUSCHs in time, selecting the fifth PUSCH for transmission; where the fifth PUSCH is associated with at least two SRS resource sets, and the fifth PUSCH is configured for SDM transmission or SFN transmission, and the other PUSCHs are PUSCHs among the multiple PUSCHs except the fifth PUSCH.

In some embodiments, when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

In some embodiments, the multiple PUSCHs include at least one of the following:
at least one DG-PUSCH and at least one CG-PUSCH.

In some embodiments, the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

In some embodiments, the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
wherein the uplink transmission includes at least one of the following: PUSCH and PUCCH.

In some embodiments, after selecting N PUSCHs for transmission from the multiple PUSCHs, the method further includes at least one of the following:
performing overlapping processing of uplink transmissions with the same priority;
performing overlapping processing of uplink transmissions with different priorities; or
performing overlap processing of uplink transmission;
where the uplink transmission includes at least one of the following: PUSCH and PUCCH.

In some embodiments, the method further includes:
transmit a sixth PUSCH;
wherein a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

**In** some embodiments, the method further includes:
select, according to a third selection rule, PUSCH for UCI multiplexing transmission; where the third selection rule includes at least one of the following:
PUSCHs that overlap in time in a cell are as a whole for selection;
at least one PUSCH is selected for UCI multiplexing from PUSCHs associated with same resource set parameter as the UCI.

One embodiment of the present disclosure provides a user equipment (UE), including: a memory, a transceiver and a processor;
wherein the memory is used to store a computer program; the transceiver is used to send and receive data under the control of the processor; and the processor is used to read the computer program in the memory and perform the following operations:
obtaining parameter information corresponding to multiple PUSCHs; wherein the parameter information includes at least one of the following: resource set information, number of transmission layers, priority information, or transmission scheme;
determining N PUSCHs for transmission from the multiple PUSCHs which are overlapped based on the parameter information; where N is an integer greater than or equal to 1.

**In** some embodiments, the parameter information includes: resource set information and priority information corresponding to each PUSCH; and the resource set information includes resource set parameters associated with each PUSCH in the multiple PUSCHs;
the determining N PUSCHs for transmission from the multiple PUSCHs which are overlapped based on the parameter information, includes:
selecting based on the parameter information and according to a first selection rule, N PUSCHs from the multiple PUSCHs for transmission; wherein the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; where the other resource set parameter is a resource set parameter other than the resource set parameter associated with the first PUSCH;
selecting N PUSCHs from PUSCHs of a first priority for transmission; where when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; where the first priority is the highest priority among priorities of the multiple PUSCHs, and N1 is an integer less than N and greater than 1;
maximizing the number of selected PUSCHs; or
maximizing a sum of priority indices of selected PUSCHs.

In some embodiments, the parameter information includes resource set information and a number of transmission layers of each PUSCH, where the resource set information includes resource set parameters associated with each PUSCH in the multiple PUSCHs;
the determining N PUSCHs for transmission from the multiple PUSCHs which are overlapped based on the parameter information, includes:
determining based on the parameter information and according to a second selection rule, N PUSCHs from the multiple PUSCHs for transmission; where the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

In some embodiments, the second selection rule includes multiple items of: maximizing the number of selected PUSCHs, the total number of transmission layers of selected PUSCHs not exceeding the transmission capability of the user equipment, or maximizing the total number of transmission layers of selected PUSCHs;
the determining, based on the parameter information and according to a second selection rule, N PUSCHs from the multiple PUSCHs for transmission, includes:
selecting N PUSCHs for transmission from the multiple PUSCHs, based on the parameter information and according to the second selection rule as well as a predefined order of multiple items included in the second selection rule.

In some embodiments, the parameter information includes: resource set information, the number of transmission layers of each PUSCH and priority information corresponding to each PUSCH; and the resource set information includes resource set parameters associated with each PUSCH in the multiple PUSCHs;
the determining N PUSCHs for transmission from the multiple PUSCHs which are overlapped based on the parameter information, includes:
selecting, based on the parameter information, a third PUSCH for transmission from the multiple PUSCHs, and selecting a fourth PUSCH for transmission from the multiple PUSCHs;
wherein the third PUSCH includes at least one of the following:
PUSCH with the highest priority;
PUSCH with a resource set parameter of a specific value;
PUSCH with a number of transmission layers of a specific value; or
PUSCH with a specific type;
wherein the fourth PUSCH satisfies a target condition, and the target condition includes at least one of the following conditions:
being different from resource set parameters associated with the third PUSCH;
the number of transmission layers not exceeding a first value, where the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

In some embodiments, the resource set parameters include:
high-layer parameters related to control resource set or SRS resource set index.

In some embodiments, the priority information includes at least one of the following:
a priority index, a first high-layer parameter, and a second high-layer parameter; where the first high-layer parameter is used to indicate that a priority of dynamic grant is lower than a priority of configured grant, and the second high-layer parameter is used to indicate that a priority of dynamic grant is higher than the priority of the configured grant.

In some embodiments, the parameter information includes resource set information and a transmission scheme of each PUSCH, and the resource set information includes an SRS resource set associated with each PUSCH;
the determining N PUSCHs for transmission from the multiple PUSCHs which are overlapped based on the parameter information, includes:
when a fifth PUSCH among the multiple PUSCHs overlap with those of other PUSCHs in time, selecting the fifth PUSCH for transmission; where the fifth PUSCH is associated with at least two SRS resource sets, and the fifth PUSCH is configured for SDM transmission or SFN transmission, and the other PUSCHs are PUSCHs among the multiple PUSCHs except the fifth PUSCH.

In some embodiments, when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

In some embodiments, the multiple PUSCHs include at least one of the following:
at least one DG-PUSCH and at least one CG-PUSCH.

In some embodiments, the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

In some embodiments, the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
wherein the uplink transmission includes at least one of the following: PUSCH and PUCCH.

In some embodiments, after selecting N PUSCHs for transmission from the multiple PUSCHs, the device further includes at least one of the following:
performing overlapping processing of uplink transmissions with the same priority;
performing overlapping processing of uplink transmissions with different priorities; or
performing overlap processing of uplink transmission;
where the uplink transmission includes at least one of the following: PUSCH and PUCCH.

In some embodiments, the processor is further used to:
transmit a sixth PUSCH;
wherein a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

In some embodiments, the processor is further used to:
select, according to a third selection rule, PUSCH for UCI multiplexing transmission; where the third selection rule includes at least one of the following:
PUSCHs that overlap in time in a cell are as a whole for selection;
at least one PUSCH is selected for UCI multiplexing from PUSCHs associated with same resource set parameter as the UCI.

One embodiment of the present disclosure provides a user equipment (UE), including:
an obtaining unit used to obtain parameter information corresponding to multiple PUSCHs; wherein the parameter information includes at least one of the following: resource set information, number of transmission layers, priority information, or transmission scheme;
a transmission unit used to determine N PUSCHs for transmission from the multiple PUSCHs which are overlapped based on the parameter information; where N is an integer greater than or equal to 1.

One embodiment of the present disclosure provides a processor-readable storage medium, including a computer program stored thereon; wherein the computer program is used to cause a processor to execute the uplink transmission method provided in the present disclosure.

In the embodiment of the present disclosure, the user equipment obtains parameter information corresponding to multiple physical uplink shared channels (PUSCH), respectively, where the parameter information includes at least one of the following: resource set information, number of transmission layers, priority information or transmission scheme; the user equipment determines N PUSCHs for transmission from the multiple PUSCHs based on the parameter information; when N is greater than 1, the N PUSCHs overlap in time, and N is an integer greater than or equal to 1. In this way, N PUSCHs can be determined for transmission from multiple PUSCHs based on the above parameter information; and when N is greater than 1, the N PUSCHs can be transmitted simultaneously, thereby improving the transmission performance of the user equipment.

### BRIEF DESCRIPTION OF THE DRAWINGS

FIG. 1 is a schematic diagram of an applicable network architecture according to an embodiment of the present disclosure;
FIG. 2 is a flow chart of an uplink transmission method according to an embodiment of the present disclosure;
FIG. 3 is a schematic diagram of PUSCH according to an embodiment of the present disclosure;
FIG. 4 is a schematic diagram of PUSCH according to an embodiment of the present disclosure;
FIG. 5 is a schematic diagram of PUSCH according to an embodiment of the present disclosure;
FIG. 6 is a schematic diagram of a user equipment according to an embodiment of the present disclosure; and
FIG. 7 is another schematic diagram of a user equipment according to an embodiment of the present disclosure.

### DETAILED DESCRIPTION

In order to make the technical problems to be solved, technical solutions, and advantages of the present disclosure clearer, a detailed description will be given below with reference to the accompanying drawings and specific embodiments.

In the embodiment of the present disclosure, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

In the embodiment of the present application, the term "plurality" refers to two or more than two, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

The embodiments of the present application provide an uplink transmission method, user equipment and a readable storage medium, which can solve the problem of poor transmission performance of the user equipment.

The method and the device are based on the same application concept. Since the principles of solving problems in the method and the device are similar, reference may be made to each other for implementations of the device and the method, the repetition of which is not further provided herein.

The technical solution of the embodiment of the present disclosure may be applied to various systems, especially a 6G system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD), LTE time division duplex (TDD) system, long term evolution advanced (LTE-A) system, universal mobile telecommunication system (UMTS), worldwide interoperability for microwave access (WiMAX) system, 5th-Generation (5G) New Radio (NR) system, or 6G system. Each of these systems includes a terminal device and a network device. Each system further includes a core network part, e.g., an Evolved Packet System (EPS) or 5G system (5GS/5GC).

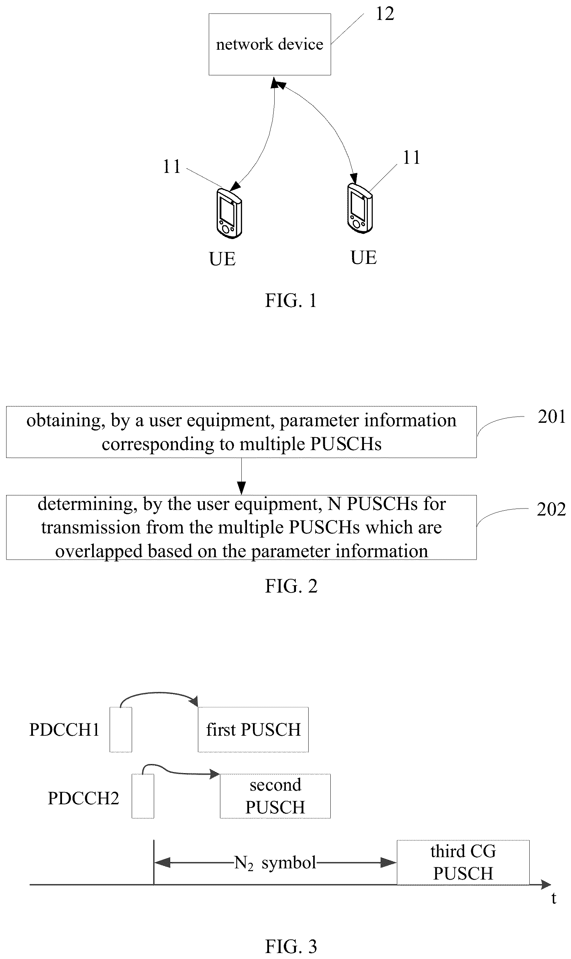

Refers to FIG. 1, FIG. 1 shows a schematic diagram of an applicable network architecture according to an embodiment of the present disclosure. As shown in FIG. 1, multiple terminal devices 11 and a network device 12 are included.

The terminal device 11 involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as user equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, access point, remote terminal, access terminal, user terminal, user agent or user device, which will not be particularly defined herein.

The network device 12 involved in the embodiment of the present disclosure may be a radio access network (RAN) device or a core network device.

The radio access network device may be a base station (BS), and such a base station may include a plurality of cells providing services for UE. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a 6G base station, a Home evolved Node B (HeNB), a relay node, a femto, or a pico, which will not be particularly defined herein. In some network structures, the network device includes a centralized unit (CU) and a distributed unit (DU), which may be geographically separated from each other. In some network architectures, the network device may include a transmitting receiving point (TRP).

The core network device may include but are not limited to at least one of the following: core network node, core network function, mobility management entity (MME), access and mobility management function (AMF), session management function (SMF), user plane function (UPF), policy control function (PCF), policy and charging rules function (PCRF), edge application server discovery function (EASDF), unified data management (UDM), unified data repository (UDR), home subscriber server (HSS), centralized network configuration (CNC), network repository function (NRF), network exposure function (NEF), local NEF (L-NEF), binding support function (BSF), application function (AF), PDU session anchor (PSA), etc. Here, PDU is an abbreviation for protocol data unit, which refers to a protocol data unit. It is to be noted that in the embodiments of the present disclosure, only the core network device in the NR system is used as an example for illustration, and the specific types of core network devices are not restricted.

It is to be noted that in the embodiments of the present disclosure, a user equipment is connected to the core network through a radio access network device.

In the embodiments of the present disclosure, multi input multi output (MIMO) transmission is performed between the network device and the user equipment each with one or more antennae, and the MIMO transmission is single user MIMO (SU-MIMO) or multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Referring to FIG. 2, which is a flow chart of an uplink transmission method according to one embodiment of the present disclosure. As shown in FIG. 2, the method includes the following steps:
Step 201: obtaining, by a user equipment, parameter information corresponding to multiple PUSCHs; where the parameter information includes at least one of the following: resource set information, a number of transmission layers, priority information, or transmission scheme;
Step 202: determining, by the user equipment, N PUSCHs for transmission from the multiple PUSCHs which are overlapped based on the parameter information; where N is an integer greater than or equal to 1.

It is to be noted that the above parameter information corresponding to the multiple PUSCHs may be parameter information corresponding to the multiple PUSCHs respectively. The above multiple PUSCHs may be multiple PUSCHs that the user equipment intends to transmit. For example, the multiple PUSCHs include at least one of the following:
at least one DG-PUSCH and at least one CG-PUSCH.

In some implementations, the multiple PUSCHs may be multiple PUSCHs overlapping in the time domain.

The above parameter information corresponding to the multiple PUSCHs may be parameter information of each PUSCH, or some parameters may be applicable to multiple PUSCHs.

In addition, the above parameter information may be pre-configured, for example, part or all of the parameter information may be pre-configured by the network side, or some parameter information may be determined by the user equipment according to indications from the network side.

The above resource set information may be information related to a control resource set (CORESET), for example, high-layer parameters (control resource set pool index (coresetPoolIndex)) corresponding to the control resource set, such as a value of coresetPoolIndex; or, the above resource set information may be SRS resource set information.

The above priority information may be a priority index, or priority information between different PUSCH types, such as a high-layer parameter prioLowDG-HighCG or prioHighDG-LowCG, where prioLow indicates low priority and prioHigh indicates high priority.

The above transmission scheme may be a transmission scheme such as SDM transmission or SFN transmission.

The determining, by the user equipment, N PUSCHs for transmission from the multiple PUSCHs based on the parameter information, may include: selecting some PUSCHs from the multiple PUSCHs based on the parameter information and transmitting the some PUSCHs, such as selecting 2 PUSCHs for transmission. It is to be noted that in the embodiments of the present disclosure, it is not limited to selecting some PUSCHs, and all PUSCHs may also be selected for transmission.

The N PUSCHs overlapping in the time domain may be that the N PUSCHs completely or partially overlap in time.

In the embodiment of the present disclosure, the above steps can be used to determine N PUSCHs for transmission from multiple PUSCHs based on the above parameter information; and when N is greater than 1, the N PUSCHs can be transmitted simultaneously, thereby improving the transmission performance of the user equipment. In addition, the network side is aware of the behavior of the user equipment determining the above N PUSCHs for transmission or the network side also determines the above N PUSCHs from the above multiple PUSCHs according to the same rule, and thus it can be ensured that the N PUSCHs determined by the network side and the user equipment (for example, N PUSCHs transmitted simultaneously) are consistent, thereby preventing the network side from failing to receive PUSCH.

In some embodiments, the parameter information includes: resource set information and priority information corresponding to each PUSCH, where the resource set information includes resource set parameters associated with each PUSCH in the multiple PUSCHs.

The determining, by the user equipment, N PUSCHs for transmission from the multiple PUSCHs based on the parameter information, includes:
selecting, by the user equipment, based on the parameter information and according to a first selection rule, N PUSCHs from the multiple PUSCHs for transmission; where the first selection rule includes at least one of the following:
selecting PUSCH with a highest priority for transmission from PUSCHs associated with each resource set parameter, respectively;
selecting a first PUSCH with a highest priority from the multiple PUSCHs for transmission, and selecting a second PUSCH with a highest priority for transmission from PUSCHs associated with other resource set parameter; where the other resource set parameter is a resource set parameter other than the resource set parameter associated with the first PUSCH;
selecting N PUSCHs from PUSCHs of a first priority for transmission; where when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; where the first priority is the highest priority among priorities of the multiple PUSCHs, and N1 is an integer less than N and greater than 1;
maximizing the number of selected PUSCHs; or
maximizing a sum of priority indices of selected PUSCHs.

The above resource set parameters associated with each PUSCH may be that resource set parameters of each PUSCH may be parameters of the same type; if values of the parameters are different, the resource set parameters are considered to be different; if the values are the same, the resource set parameters are considered to be the same.

In some implementations, the resource set parameters may include:
high-layer parameters related to control resource set (coresetPoolIndex) or SRS resource set index.

For example, the above resource set information includes coresetPoolIndex of multiple PUSCHs, values of coresetPoolIndex of the multiple PUSCHs may be the same or different, or values of coresetPoolIndex of some PUSCHs may be the same, or values of coresetPoolIndex of some PUSCHs may be different.

In some embodiments, the priority information includes at least one of the following:
a priority index, a first high-layer parameter, and a second high-layer parameter; where the first high-layer parameter is used to indicate that a priority of dynamic grant is lower than a priority of configured grant, and the second high-layer parameter is used to indicate that a priority of dynamic grant is higher than the priority of the configured grant.

The above priority index may be indicated by a priority index indication field in DCI. The higher the priority index value, the higher the priority. For example, if the priority indexes of PUSCH 1 and PUSCH 2 are 1 and 0 respectively, the priority of PUSCH 1 is higher than that of PUSCH 2.

The first high-layer parameter may be that the priority of high-layer parameter dynamic grant is lower than the priority of configured grant (prioLowDG-HighCG); and the second high-layer parameter may be that the priority of high-layer parameter dynamic grant is higher than the priority of configured grant (prioHighDG-LowCG).

In this implementation, PUSCH to be finally transmitted may be determined based on different priority information, thereby ensuring that PUSCH with a high priority is transmitted.

The selecting PUSCH with the highest priority for transmission from PUSCHs associated with each resource set parameter can be that the user equipment determines that PUSCH with the highest priority in PUSCHs associated with each coresetPoolIndex value can be transmitted, or the user equipment determines that PUSCH with the highest priority in PUSCHs associated with each SRS resource set can be transmitted. In this way, it enables selection of high priority PUSCH for transmission, thereby improving transmission reliability of priority service. If all PUSCHs are associated with coresetPoolIndices having the same value (e.g., a value of 0), or if all PUSCHs are associated with the same SRS resource set (e.g., SRS resource set ID 5), the user equipment will select PUSCH with the highest priority from all PUSCHs for transmission.

The above selecting a first PUSCH with a highest priority for transmission from the multiple PUSCHs, and selecting a second PUSCH with a highest priority for transmission from PUSCHs associated with other resource set parameter can be that the user equipment selects the first PUSCH with the highest priority for transmission according to a rule defined in the protocol, and then selects the second PUSCH with the highest priority for transmission among PUSCHs associated with coresetPoolIndex values which are different from that of the first PUSCH; or, it can be that the first PUSCH with the highest priority is selected for transmission according to the rule defined in the protocol, and then the second PUSCH with the highest priority is selected for transmission among PUSCHs associated with SRS resource sets which are different from that of the first PUSCH. In this way, a high priority PUSCH can be selected for transmission, thereby improving transmission reliability of priority service. Meanwhile, it is ensured that two transmitted PUSCHs are associated with different TRPs or antenna panels, so that the two PUSCHs can be transmitted by two antenna panels at the same time.

The above selecting N PUSCHs for transmission in PUSCHs of the first priority may be that there are multiple (for example, two) different priority indexes in the above multiple PUSCHs, and the user selects one or more PUSCHs associated with different coresetPoolIndex values for transmission from PUSCHs with larger priority indexes; or, there may be multiple (for example, two) different priority indexes in the above multiple PUSCHs, and the user selects one or more PUSCHs associated with different SRS resource sets for transmission from PUSCHs with larger priority indexes. In this way, a high priority PUSCH can be selected for transmission, thereby improving transmission reliability of priority service. Meanwhile, it is ensured that two transmitted PUSCHs are associated with different TRPs or antenna panels, so that the two PUSCHs can be transmitted by two antenna panels at the same time.

The above selecting N1 PUSCHs from PUSCHs of a first priority for transmission, and determining at most N-N1 PUSCHs for transmission according to a resource set parameter, may be that there are multiple (for example, two) different priority indexes among the above multiple PUSCHs, and the user equipment selects N1 PUSCHs for transmission among PUSCHs with a larger priority index, and then selects at most N-N1 PUSCHs for transmission among PUSCHs with coresetPoolIndex values different from that of the N1 PUSCHs, where the priority of the N-N1 PUSCHs for transmission may be different from that of the N1 PUSCHs; or, there may be multiple (for example, two) different priority indexes among the above multiple PUSCHs, and the user equipment selects N1 PUSCHs for transmission among PUSCHs with a larger priority index, and then selects multiple N-N1 PUSCHs for transmission among the PUSCHs associated with SRS resource sets different from that of the N1 PUSCHs, where the priority of the N-N1 PUSCHs for transmission may be different from that of the N1 PUSCHs. For another example, when the network side configures the priority of DG PUSCH to be greater than that of CG PUSCH, the user equipment selects N1 PUSCHs in DG PUSCH, and then selects at most N-N1 DG PUSCHs or CG PUSCHs for transmission in PUSCHs with coresetPoolIndex values different from that of the N1 PUSCHs. In this way, a high priority PUSCH can be selected for transmission, thereby improving transmission reliability of priority service.

The maximizing the number of selected PUSCHs may be to select as many PUSCHs as possible for transmission. For example, each coresetPoolIndex value has an associated PUSCH that is determined to be transmitted; if there are 2 coresetPoolIndex values, PUSCH is selected for transmission for the 2 coresetPoolIndex values. A prerequisite for maximizing the number of selected PUSCHs is that the number of layers of each selected PUSCH cannot exceed a first specific value, or a sum of the number of layers of multiple PUSCHs cannot exceed a second specific value. The first specific value is configured or indicated by the network side, or is pre-specified by the protocol, and is subject to UE capability restrictions or scheduling restrictions. The second specific value may also be configured or indicated by the network side, or is pre-specified by the protocol, and is subject to UE capability restrictions.

In addition, the maximizing the number of selected PUSCHs may also be that when satisfying other conditions included in a first selection rule, maximizing the number of PUSCHs, for example, selecting a first PUSCH with the highest priority for transmission among the multiple PUSCHs, and selecting a second PUSCH with the highest priority for transmission among PUSCHs associated with other resource set parameters; where the second PUSCH with the highest priority may be to select as many second PUSCHs as possible based on the principle of maximizing the number of PUSCHs, such as selecting multiple PUSCHs with the same priority but whose priority is second only to the first PUSCH.

By maximizing the number of selected PUSCHs, it is possible to transmit as many PUSCHs as possible, thereby improving the transmission performance of the user equipment.

The maximizing a sum of priority indices of selected PUSCHs can be to maximize the sum of the priority indexes of the selected N PUSCHs as much as possible. For example, when multiple selection options are allowed, N PUSCHs corresponding to the selection option with the largest sum of the priority indexes of the N PUSCHs, are selected for transmission from multiple selection options. In this way, the sum of the priority indexes of the PUSCHs of the N PUSHCs can be maximized as much as possible, thereby transmitting PUSCHs with high priority as much as possible, and then improving the transmission performance of the user equipment.

In some embodiments, the parameter information includes resource set information and a number of transmission layers of each PUSCH, where the resource set information includes resource set parameters associated with each PUSCH in the multiple PUSCHs.

The determining, by the user equipment, N PUSCHs for transmission from the multiple PUSCHs which are overlapped based on the parameter information, includes:
determining, by the user equipment, based on the parameter information and according to a second selection rule, N PUSCHs from the multiple PUSCHs for transmission; where the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

The above resource set information refers to the corresponding description of the above implementation method, which will not be repeated here.

The number of transmission layers may include at least one of the following indication information in signaling obtained by the user equipment:
precoding information and number of layers (TPMI) field; SRS resource indicator (SRI); second precoding information or second precoding information and number of layers (TPMI) field; the number of transmission layers indicated by a SRS resource indicator (second SRI) field.

In codebook-based PUSCH transmission, TPMI or the second TPMI indicates the number of layers of precoding codewords for PUSCH; in non-codebook-based PUSCH transmission, SRI or the second SRI indicates the number of transmission layers for PUSCH.

The maximizing the number of selected PUSCHs may be to select as many PUSCHs as possible for transmission, such as each coresetPoolIndex value having an associated PUSCH determined to be transmitted, or each SRS resource set having an associated PUSCH determined to be transmitted.

In addition, the maximizing the number of selected PUSCHs may also be to maximize the number of selected PUSCHs under the premise that a total number of transmission layers of selected PUSCHs does not exceed the transmission capability of the user equipment or the total number of transmission layers of selected PUSCHs is maximized.

By maximizing the number of selected PUSCHs, it is possible to transmit as many PUSCHs as possible, thereby improving the transmission performance of the user equipment.

The transmission capability of the user equipment may be a maximum number of transmission layers supported by the user equipment for simultaneous transmission.

The total number of transmission layers of the selected PUSCH being maximized can be to select N PUSCHs with the largest total number of transmission layers for transmission as much as possible, such as selecting PUSCH with the largest number of transmission layers for transmission from PUSCHs corresponding to each coresetPoolIndex value.

By maximizing the total number of transmission layers of the selected PUSCH, the PUSCHs transmitted simultaneously by the user equipment can transmit more information, thereby improving the transmission performance of the user equipment.

In some embodiments, the second selection rule includes multiple items of: maximizing the number of selected PUSCHs, the total number of transmission layers of selected PUSCHs not exceeding the transmission capability of the user equipment, or maximizing the total number of transmission layers of selected PUSCHs.

The selecting, by the user equipment, based on the parameter information and according to a second selection rule, N PUSCHs for transmission from the multiple PUSCHs, includes:

selecting, by the user equipment, N PUSCHs for transmission from the multiple PUSCHs, based on the parameter information and according to the second selection rule as well as a predefined order of multiple items included in the second selection rule.

The predefined order of the above multiple items can be agreed upon by the protocol or configured on the network side, and the specific order is not limited.

For example, maximizing the number of selected PUSCHs is the first order, then maximizing the number of selected PUSCHs is prioritized. For another example, the total number of transmission layers of the selected PUSCHs not exceeding the transmission capacity of the user equipment is the first order, then, it is to ensure that the total number of transmission layers of the selected PUSCHs matches the transmission capacity of the user equipment. For another example, maximizing the total number of transmission layers of the selected PUSCHs is the first order, then maximizing the total number of transmission layers of the selected PUSCHs is prioritized. The above predefined order can enhance the UE's transmission more reliable.

In some embodiments, the parameter information includes: resource set information, the number of transmission layers of each PUSCH and priority information corresponding to each PUSCH, where the resource set information includes resource set parameters associated with each PUSCH in the multiple PUSCHs.

The determining, by the user equipment, N PUSCHs for transmission from the multiple PUSCHs which are overlapped based on the parameter information, includes:
selecting, by the user equipment, based on the parameter information, a third PUSCH for transmission from the multiple PUSCHs, and selecting a fourth PUSCH for transmission from the multiple PUSCHs;
where the third PUSCH includes at least one of the following:
PUSCH with the highest priority;
PUSCH with a resource set parameter of a specific value;
PUSCH with a number of transmission layers of a specific value; or
PUSCH with a specific type;
where the fourth PUSCH satisfies a target condition, and the target condition includes at least one of the following conditions:
being different from resource set parameters associated with the third PUSCH;
the number of transmission layers not exceeding a first value, where the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

The above resource set information, number of transmission layers and priority information can refer to the corresponding description of the above embodiment, and will not be repeated here.

The priority information corresponding to each PUSCH may be a priority index corresponding to each PUSCH.

**The specific values corresponding to the above resource set parameters, the specific values corresponding to the above number of transmission layers and the above specific types can be agreed upon by the protocol or configured on the network side, and can be specifically defined or configured according to service requirements or scenario requirements, which are not specifically limited.**

**In this way, the PUSCH with a highest priority, the PUSCH with a resource set parameter of a specific value, PUSCH with a number of transmission layers of a specific value, or PUSCH of a specific type, can be transmitted first.**

**The above first value can be determined based on the UE' transmission capability, such as a value that is less than the maximum number of transmission layers** supported by the UE for simultaneous transmission, which can be specifically determined according to service, scenario and other requirements, which are not specifically limited.

In this implementation, transmission of the third PUSCH can be prioritized, and then the fourth PUSCH is selected based on the above target condition, where the fourth PUSCH may be one or multiple PUSCHs. Further, through the above target condition, the finally determined N PUSCHs are matched with the UE's transmission capability, thereby ensuring that multiple PUSCHs can be transmitted simultaneously by the user equipment. Additionally, higher-priority PUSCHs can be prioritized for transmission, thereby further enhancing the UE's transmission performance.

In some embodiments, the parameter information includes resource set information and a transmission scheme of each PUSCH, where the resource set information includes an SRS resource set associated with each PUSCH.

The determining, by the user equipment, N PUSCHs for transmission from the multiple PUSCHs which are overlapped based on the parameter information, includes:
when a fifth PUSCH among the multiple PUSCHs overlap with those of other PUSCHs in time, selecting, by the user equipment, the fifth PUSCH for transmission; where the fifth PUSCH is associated with at least two SRS resource sets, and the fifth PUSCH is configured for SDM transmission or SFN transmission, and the other PUSCHs are PUSCHs among the multiple PUSCHs except the fifth PUSCH, such as a single-transmission PUSCH, or repetition transmission based on time division multiplexing (TDM).

Since the fifth PUSCH is associated with two SRS resource sets and is used to improve transmission reliability, the fifth PUSCH should have a higher priority than other PUSCHs. In addition, if PUSCH is configured with TDM-based repetition transmission based on TDM, although the transmission scheme is also used to improve transmission reliability, since PUSCH has multiple transmission occasions in the time domain, even if one transmission occasion overlaps with SDM-based or SFN-based PUSCH, other transmission occasions can still be transmitted. Therefore, when the fifth PUSCH is associated with two SRS resource sets and is configured for SDM transmission or SFN transmission, and overlaps with other PUSCHs, only the fifth PUSCH is transmitted, and other PUSCHs are not transmitted, or the transmission of other PUSCHs is dropped.

In this way, higher priority is assigned to simultaneous transmissions, to ensure that it can be successfully transmitted, thereby enhancing the transmission reliability of PUSCH.

In some embodiments, when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

The N PUSCHs satisfying at least one of the above items may be obtained through selection in the above implementation manner, or N PUSCHs determined by other manners other than the above multiple implementation manners may satisfy at least one of the above items.

The above high-layer parameter related to the control resource set may be coresetPoolIndex.

In this implementation, the N PUSCHs are associated with different high-layer parameters related to control resource sets, so that the user equipment can transmit more PUSCHs; and the N PUSCHs are associated with different SRS resource sets, so that the user equipment can also transmit more PUSCHs.

By making that the total number of transmission layers of the N PUSCHs does not exceed the UE's transmission capability, the total number of transmission layers of the PUSCHs transmitted by the user equipment can be maximized as much as possible, thereby improving the transmission performance of the user equipment.

Since the N PUSCHs have different priority indexes, PUSCH transmissions with different priorities can be taken into consideration.

The PUSCH type may be at least one of the following:

DG PUSCH, CG type 1 (type 1) PUSCH or CG type 2 (type 2) PUSCH.

Since the N PUSCHs have different PUSCH types, transmissions of PUSCHs of different types can be taken into account.

Since each of the N PUSCHs has a single TCI state, N PUSCHs with a single TCI state can be transmitted simultaneously, so as to transmit more PUSCHs.

By not configuring SDM transmission or SFN transmission for each of the N PUSCHs, more PUSCHs can be transmitted.

In some embodiments, the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

The multiple PUSCHs after performing overlapping processing of PUSCHs and PUCCHs can be that after solving overlapping problem of PUSCHs and PUCCHs according to the overlapping processing manner defined by the protocol, N PUSCHs are determined for transmission from remaining multiple PUSCHs after processing. The multiple PUSCHs after performing overlapping processing of PUCCHs can be that after solving the overlapping problem of PUCCHs according to the overlapping processing manner defined by the protocol, N PUSCHs are determined for transmission from the multiple PUSCHs.

The multiple PUSCHs before performing overlapping processing of PUCCHs may be that after N PUSCHs are determined, the overlapping problem of PUCCHs is solved according to the overlapping processing manner defined by the protocol.

The multiple PUSCHs after performing overlapping processing of PUSCHs and PUCCHs with different priorities may be that after solving the overlapping problem of PUSCHs and PUCCHs with different priorities according to the overlapping processing manner defined by the protocol, N PUSCHs are determined for transmission from remaining multiple PUSCHs after processing.

**In** this implementation, it can support determining N PUSCHs for simultaneous transmission in a variety of different scenarios to meet the needs of different scenarios.

As an implementation in some embodiments, the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
where the uplink transmission includes at least one of the following: PUSCH and PUCCH.

The multiple PUSCHs before performing overlapping processing of uplink transmission with the same priority may be that after determining N PUSCHs for transmission, overlapping problem of PUSCH and/or PUCCH with the same priority is solved according to the overlapping processing manner defined by the protocol.

The multiple PUSCHs after performing overlapping processing of uplink transmission with the same priority may be that according to the overlapping processing manner defined by the protocol, overlapping problem of PUSCH and/or PUCCH with the same priority is first solved, and then N PUSCHs are determined for transmission from remaining multiple PUSCHs after the processing.

The multiple PUSCHs before performing overlapping processing of uplink transmission with different priorities may be that after determining N PUSCHs for transmission, the overlapping problem of PUSCHs and/or PUCCHs with different priorities is solved according to the overlapping processing manner defined by the protocol.

The multiple PUSCHs after performing overlapping processing of uplink transmissions with different priorities may be that according to the overlapping processing manner defined by the protocol, the overlapping problem of PUSCHs and/or PUCCHs with different priorities is first solved, and then N PUSCHs are determined for transmission from remaining multiple PUSCHs.

In this implementation, it supports determining N PUSCHs for simultaneous transmission in a variety of different scenarios to meet the needs of different scenarios.

In some embodiments, after selecting N PUSCHs for transmission from the multiple PUSCHs, the method further includes at least one of the following:
performing overlapping processing of uplink transmissions with the same priority;
performing overlapping processing of uplink transmissions with different priorities; or
performing overlap processing of uplink transmission;
where the uplink transmission includes at least one of the following: PUSCH and PUCCH.

The above performing overlapping processing of uplink transmissions with the same priority may be to perform overlapping processing of PUSCH and/or PUCCH with the same priority. The above performing overlapping processing of uplink transmissions with different priorities may be to perform overlapping processing of PUSCH and/or PUCCH with different priorities.

For example, before processing the overlapping of PUSCH and/or PUCCH with the same priority, it is to consider the issue of transmitting at most 2 PUSCHs simultaneously, such as first selecting 2 PUSCHs for transmission, and then solving the overlap/conflict between PUCCH and PUSCH.

For another example, before processing the conflict between PUCCH and PUSCH with different priorities, it is to consider the issue of transmitting at most 2 PUSCHs simultaneously, such as first selecting 2 PUSCHs for transmission, and then solving the overlap/conflict between PUCCH and PUSCH.

In this implementation, since the above overlapping processing is performed, transmission conflicts on the UE can be avoided, thereby improving the transmission reliability of the user equipment.

In some implementations, transmission of PUSCHs other than the N PUSCHs among the multiple PUSCHs is canceled to ensure transmission reliability of PUSCHs that can be transmitted.

In some embodiments, the method further includes:
transmitting, by the user equipment, a sixth PUSCH;
where a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

The first PDCCH may be a later PDCCH among PDCCHs received by the user equipment for scheduling or activating PUSCH, for example, a later PDCCH among two PDCCHs received by the user equipment for scheduling or activating PUSCH.

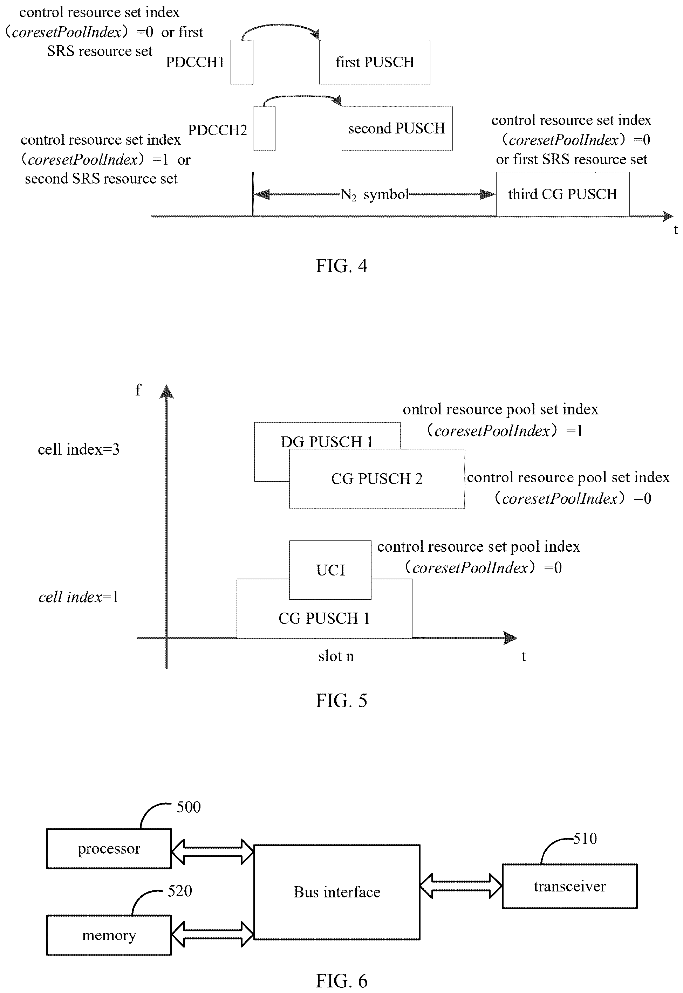

The sixth PUSCH may be a third PUSCH shown in FIG. 3, and the first PDCCH may be PDCCH2 shown in FIG. 3. The sixth PUSCH may be a third PUSCH shown in FIG. 4, and the second PDCCH may be PDCCH2 shown in FIG. 4.

The above PUSCH preparation time may be N2 symbols, which may be a preparation time agreed upon by the protocol or configured by the network side, or matched by the UE capability. The above N2 may be a positive integer agreed upon by the protocol, depending on the capability of the UE. For example, for PUSCH processing capability 2 (corresponding to service transmission with high latency requirements), when a subcarrier spacing is 15kHz, 30kHz and 60kHz, values of N2 are 5, 5.5 and 11 symbols respectively.

In this implementation, since the sixth PUSCH and the above first PDCCH meet the above conditions, it can avoid that the preparation time of the user equipment for processing multiple PUSCHs (including DG PUSCH and CG PUSCH) exceeds the UE capability, that is, when a transmission interval between two PUSCHs is less than N2, the user equipment has no way to complete corresponding PUSCH generation.

Since the sixth PUSCH and the second PDCCH meet the above conditions, when the user equipment has multiple antenna panels, PUSCH can be prepared separately for scheduling of each transmit and receive point (TRP). It is only necessary to ensure that the processing time of multiple PUSCHs corresponding to the same antenna panel does not exceed the UE capability.

In some embodiments, the method further includes:
selecting, by the user equipment, according to a third selection rule, PUSCH for UCI multiplexing transmission; where the third selection rule includes at least one of the following:
PUSCHs that overlap in time in a cell are as a whole for selection;
at least one PUSCH is selected for UCI multiplexing from PUSCHs associated with same resource set parameter as the UCI.

The PUSCHs that overlap in time in a cell being as a whole for selection can be that when one of PUSCHs overlapping in the time domain in the same cell is selected in a certain step (such as selecting in the following order and each comparison/selection counts as a step: PUSCH carrying non-periodic CSI reporting>DG PUSCH>PUSCH with the smallest cell index value (parameter ServCellIndex)>PUSCH transmitted earliest in the slot), other PUSCHs are also selected accordingly.

For example, the user equipment jointly selects PUSCHs for simultaneous transmission. If one PUSCH is selected, the other PUSCH is also selected accordingly. As shown in FIG. 5, DG PUSCH 1 is selected first, and then CG PUSCH 2 transmitted simultaneously with DG PUSCH 1 is also selected at the same time.

For another example, the user equipment processes PUSCHs for simultaneous transmission as two independent PUSCHs and selects PUSCHs according to the priority. If a finally selected PUSCH is one of PUSCHs for simultaneous transmission, PUSCH associated with it can also be used as a candidate PUSCH for UCI multiplexing.

The above selecting at least one PUSCH for UCI multiplexing from PUSCHs associated with the same resource set parameters as the UCI may be to select at least one from PUSCHs associated with the same resource set parameters as the UCI. For example, according to the coresetPoolIndex value, PUSCHs are divided into two groups, such as PUSCHs with a coresetPoolIndex value of 0 are divided into one group, and PUSCHs with a coresetPoolIndex value of 1 are divided into one group, and a PUSCH group is selected for UCI multiplexing according to the coresetPoolIndex value associated with the PUCCH corresponding to the UCI.

In this implementation, it is possible to ensure that UCI and PUSCH multiplexed with the UCI are associated with the same resource set parameters (for example, coresetPoolIndex value), thereby ensuring that association between the UCI and TRP is not changed during the multiplexing process, i.e., ensuring that UCI can still be sent to a target TRP according to a predetermined (or indicated) TCI state.

In the embodiment of the present disclosure, the user equipment obtains parameter information corresponding to multiple physical uplink shared channels (PUSCH), respectively, where the parameter information includes at least one of the following: resource set information, number of transmission layers, priority information or transmission scheme; the user equipment determines N PUSCHs for transmission from the multiple PUSCHs based on the parameter information; when N is greater than 1, the N PUSCHs overlap in time, and N is an integer greater than or equal to 1. In this way, N PUSCHs can be determined for transmission from multiple PUSCHs based on the above parameter information; and when N is greater than 1, the N PUSCHs can be transmitted simultaneously, thereby improving the transmission performance of the user equipment.

The uplink transmission method provided in the embodiments of the present disclosure is illustrated hereinafter through multiple embodiments.

### Embodiment 1

In this embodiment, only overlap between PUSCHs is considered. For example, when a DG and a CG PUSCH overlap, or when two DGs and a CG overlap, which PUSCHs can be transmitted or need to be canceled needs to be clarified. After determining which PUSCHs can be transmitted, the conflict between PUCCH and PUSCH can be resolved, such as performing UCI multiplexing or canceling or dropping transmission of a physical channel.

The UE determines which PUSCH can be transmitted based on at least one of a coresetPoolIndex value, the number of PUSCH layers, priority index, high-layer parameter prioLowDG-HighCG or prioHighDG-LowCG, SRS resource set, transmission scheme, and signal type (DG PUSCH or CG PUSCH):
Mode 1: determining which PUSCHs can be transmitted or canceled based on the coresetPoolIndex parameter and the priority index.

The priority index also includes configuration of the high-layer parameter prioLowDG-HighCG or prioHighDG-LowCG.

For example, if two PUSCHs are associated with the same panel, they cannot be transmitted simultaneously. Therefore, two PUSCHs that can be transmitted simultaneously should be associated with different coresetPoolIndex values. Assuming that the number of layers of each PUSCH does not exceed N1, and a sum of the number of layers of multiple PUSCHs cannot exceed N, if N1 is less than or equal to N, it can be guaranteed that the total number of layers of any two PUSCHs transmitted simultaneously will not exceed the UE's capability.

Beneficial effect: determining PUSCHs according to coresetPoolIndex can ensure that the transmitted PUSCHs are associated with different UE antenna panels, thereby ensuring that multiple selected PUSCHs can always be transmitted at the same time. If multiple PUSCHs are associated with one panel, they may not be transmitted at the same time.

Mode 1-1: the UE determines that PUSCH with the highest priority among PUSCH associated with each coresetPoolIndex value can be transmitted.

For example, coresetPoolIndex of a value 0 is associated with CG PUSCH 1 and DG PUSCH 2, where priority indexes of PUSCH 1 and PUSCH 2 are 1 and 0 respectively; and coresetPoolIndex of a value 1 is associated with CG PUSCH 3, where a priority index is 0; then PUSCH 1 and PUSCH 3 can be transmitted simultaneously.

For another example, coresetPoolIndex of a value 0 is associated with CG PUSCH 1 and DG PUSCH 2, where priority indexes of PUSCH 1 and PUSCH 2 are 1 and 0 respectively; and coresetPoolIndex of a value 1 is not associated with PUSCH, then PUSCH 1 can be transmitted.

If a DCI for scheduling or activating PUSCH does not include a priority index indication, the UE treats it as priority index 0, that is, low priority; if a type 1 CG PUSCH high-layer parameter does not include a priority index configuration, the UE also treats it as priority index 1.

Alternatively, the UE does not expect that some of the multiple PUSCHs include the priority index indication and some do not include the priority index indication, that is, all PUSCHs include the priority index indication or do not include the priority index indication, so as to ensure that this method can be used.

If prioLowDG-HighCG is configured, when multiple DG PUSCHs and/or multiple CG PUSCHs overlap, the UE transmits 2 CG PUSCHs associated with different coresetPoolIndex values (if each coresetPoolIndex value is associated with a CG PUSCH), or 1 CG PUSCH (if all CG PUSCHs are associated with the same coresetPoolIndex value) and one DG PUSCH, and the DG PUSCH and the transmitted CG PUSCH are associated with different coresetPoolIndex values.

If prioHighDG-LowCG is configured, when multiple DG PUSCHs and/or multiple CG PUSCHs overlap, the UE transmits 2 DG PUSCHs associated with different coresetPoolIndex values (if each coresetPoolIndex value is associated with or schedules a DG PUSCH), or 1 DG PUSCH (if all DG PUSCHs are associated with the same coresetPoolIndex value or only one coresetPoolIndex value schedules a DG PUSCH) and a CG PUSCH, and the CG PUSCH and the transmitted DG PUSCH are associated with different coresetPoolIndex values.

Mode 1-2: selecting a first PUSCH with the highest priority for transmission is according to a manner defined by the protocol, and then selecting a second PUSCH with the highest priority for transmission from PUSCHs associated with coresetPoolIndex values different from those associated with the first PUSCH.

For example, the network side compares PUSCHs with different priorities in pairs and selects a PUSCH with the highest priority for transmission. If the UE intends to transmit CG PUSCH 1, CG PUSCH 2 and DG PUSCH 3 in a slot n, the CG PUSCH 1 has a larger priority index, and CG PUSCH 2 and DG PUSCH 3 have a smaller priority index; then according to the relevant technology, the UE will transmit CG PUSCH 1, and thus the first PUSCH is defined as CG PUSCH 1 with a larger priority index. If CG PUSCH 2 and CG PUSCH 1 are associated with different coresetPoolIndex values, and DG PUSCH 3 and CG PUSCH 1 are associated with the same coresetPoolIndex value, CG PUSCH 2 can also be transmitted. If CG PUSCH 1, CG PUSCH 2 and DG PUSCH 3 (that is, all PUSCHs) are associated with the same coresetPoolIndexx value, only CG PUSCH 1 is transmitted.

Mode 1-3: if there are two different priority indices, the UE selects one or more PUSCHs associated with different coresetPoolIndex values for transmission from PUSCHs with a larger priority index.

For example, the coresetPoolIndex value of 0 is associated with CG PUSCH 1 and DG PUSCH 2, where the priority indexes of PUSCH 1 and PUSCH 2 are 1 and 0 respectively; and the coresetPoolIndex value of 1 is associated with CG PUSCH 3, and the priority index is 1; then CG PUSCH 1 and CG PUSCH 3 can be transmitted.

For another example, coresetPoolIndex of 0 is associated with CG PUSCH 1 and DG PUSCH 2, where the priority indexes of PUSCH 1 and PUSCH 2 are 1 and 0 respectively; coresetPoolIndex of 1 is associated with CG PUSCH 3, where the priority index is 0; then only PUSCH 1 can be transmitted (according to the mode 1-1, both PUSCH 1 and PUSCH 3 can be transmitted).

The beneficial effect of this solution is to ensure that services with higher priority can be transmitted and reduce transmission of low-priority services, thereby increasing transmission reliability of high priority service (less inter-layer interference or inter-stream interference).

If prioLowDG-HighCG is configured, when multiple DG PUSCHs and/or multiple CG PUSCHs overlap, the UE selects one or two CG PUSCHs respectively associated with two coresetPoolIndex values for transmission from multiple CG PUSCHs. If multiple CG PUSCHs are associated with different coresetPoolIndex values, the UE selects one CG PUSCH associated with each coresetPoolIndex value; if a coresetPoolIndex value is associated with more than one CG PUSCH, the UE selects PUSCH with a lower CG index for transmission among multiple CG PUSCHs, or the UE does not expect a coresetPoolIndex value to be associated with multiple CG PUSCHs; or the UE selects one CG PUSCH for transmission based on the implementation; if multiple CG PUSCHs are associated with the same coresetPoolIndex value, the UE only selects one CG PUSCH for transmission, and does not transmit other CG PUSCHs and DG PUSCHs. The CG PUSCH may be PUSCH with a lower CG index among multiple CG PUSCHs.

If prioHighDG-LowCG is configured, when multiple DG PUSCHs and/or multiple CG PUSCHs overlap, the UE selects one or two DG PUSCHs associated with two coresetPoolIndex values for transmission from multiple DG PUSCHs. If multiple DG PUSCHs are associated with different coresetPoolIndex values, the UE selects one DG PUSCH associated with each coresetPoolIndex value for transmission; if multiple (including one) DG PUSCHs are associated with the same CORESETpoolIndex value, the UE selects one DG PUSCH for transmission.

In this embodiment, PUSCH that is not selected for transmission may not be transmitted; if it has been transmitted, it is necessary to stop the transmission or cancel the transmission before transmission of PUSCH that is determined to be transmitted starts.

### Embodiment 2

In this embodiment, which PUSCHs can be transmitted or cancelled is determined according to the parameter coresetPoolIndex and the number of transmission layers.

This solution is applicable when priorities of various physical channels are not distinguished, for example, when DCI does not include an indication of a priority index, one or more PUSCH to be transmitted are determined according to the parameter coresetPoolIndex and the number of transmission layers, so that the determined PUSCHs can be transmitted simultaneously by the UE.

For example, the number of transmission layers of each PUSCH is N1, and a total number of PUSCH layers that can be transmitted simultaneously is N. For each UE, N is subject to certain capability restrictions, such as N=4, 6 or 8 or other threshold values.

The beneficial effect of this solution is that it can ensure that the total number of layers of the determined one or more PUSCHs does not exceed the UE capability, thereby ensuring that multiple PUSCHs can be transmitted by the UE at the same time.

The UE selects a PUSCH transmission from each coresetPoolIndex value such that the PUSCH transmission satisfies at least one of the following conditions:
Condition 1: The number of transmitted PUSCHs is the largest, such as each coresetPoolIndex value has an associated PUSCH to be transmitted;
Condition 2: a total number N of PUSCH layers does not exceed the UE capability;
Condition 3: a total number of layers of multiple PUSCH transmissions is the maximum.

When transmission needs to meet multiple conditions, the order of the multiple conditions also needs to be determined in advance to ensure that PUSCH determined by the network side and the UE is the same.

For example, the determination is made in the order of conditions 1, 2, and 3. The coresetPoolIndex value 0 is associated with CG PUSCH 1 and DG PUSCH 2, where the number of transmission layers of PUSCH 1 and PUSCH 2 are 2 and 3 respectively; and the coresetPoolIndex value 1 is associated with CG PUSCH 3, whose number of transmission layers is 2. Since coresetPoolIndex is associated with 1 PUSCH, according to the condition 1, the UE determines that PUSCH 3 can be transmitted; according to the condition 2, the CG PUSCH 1 associated with coresetPoolIndex value 0 can also be transmitted.

For another example, when DG PUSCH is scheduled for transmission and the UE is allowed to transmit CG PUSCH, the starting time (including the starting time of PDCCH that schedules or activates PUSCH) or end time of DG PUSCH or CG PUSCH can be used as a condition, such as condition 4 of giving priority to transmission of PUSCH with earlier or later start or end time, or giving priority to transmission of PUSCH that meets a certain interval with the previously transmitted PUSCH; or, compared with CG type 1 PUSCH, giving priority to transmission of DG PUSCH or CG type 2 PUSCH as a condition, such as condition 5, so that transmission can be performed according to the latest scheduling on the network side. That is, if the network side does not want to transmit DG PUSCH or CG type 2 PUSCH, DG PUSCH or CG type 2 PUSCH will not be scheduled during CG type 1 transmission.

In this embodiment, the order of the conditions is not limited, and there can be multiple order combinations.

In addition, when the priorities of various physical channels are not distinguished, or the priorities of various physical channels are the same, the UE can also expect that the number of PUSCHs scheduled by the network side does not exceed the UE capability, that is, PUSCHs scheduled or activated by the network side can be transmitted. If the PUSCHs scheduled or activated by the network side are less than the UE transmission capability, the UE can also transmit other CG PUSCHs in addition.

### Embodiment 3

In this embodiment, which PUSCHs can be transmitted or cancelled is determined according to the priority index, the number of transmission layers and coresetPoolIndex.

For example, a PUSCH transmission with the highest priority (the first PUSCH) is determined according to the protocol definition or priority index, and then whether there is a second PUSCH transmission is determined according to the number of transmission layers and coresetPoolIndex. For example, the second PUSCH needs to meet at least two of the following conditions:
Condition A: PUSCH associated with a coresetPoolIndex value different from that of the first PUSCH;
Condition B: PUSCH with a number of layers not exceeding a certain value;
Condition C: PUSCH for which a sum of its number of transmission layers and that of the first PUSCH does not exceed a specific value;
Condition D: there is a PUSCH with a higher priority or priority index value except the first PUSCH.

When transmission needs to meet multiple conditions, the order of the multiple conditions also needs to be predetermined, which has the beneficial effect of ensuring that the PUSCH determined by the network side and the UE is the same.

### Embodiment 4

In this embodiment, which PUSCHs can be transmitted or cancelled is determined according to an SRS resource set associated with the PUSCH and the priority index.

When multiple DCI (M-DCI) is used for simultaneous transmission of multiple PUSCHs, the network side can configure two SRS resource sets for the UE, and each DG PUSCH or CG PUSCH is associated with one SRS resource set. The UE does not expect two PUSCHs associated with the same SRS resource set to be transmitted at the same time. Therefore, when configuring the high-layer parameter coresetPoolIndex or configuring simultaneous transmission of PUSCHs based on M-DCI, the method for determining which PUSCHs can be transmitted simultaneously based on the SRS resource set is the same as the method for determining the PUSCH based on the coresetPoolIndex value in modes 1, 2, and 3. For example, similar to the mode 1-1, the UE determines that PUSCH with the highest priority among the PUSCHs associated with each coresetPoolIndex value can be transmitted. When using the SRS resource set, the UE determines that PUSCH with the highest priority among the PUSCHs associated with each SRS resource set can be transmitted.

For SRS resource set and coresetPoolIndex value, similar embodiments may be applied.

Mode 1-1': the UE determines that PUSCH with the highest priority among PUSCHs associated with each SRS resource set, can be transmitted

It is assumed that the network side configures two SRS resource sets for PUSCH transmission, namely a first SRS resource set and a second SRS resource set, where the first SRS resource set is an SRS resource set with a lower set ID value (corresponding to the high-layer parameter srs-ResourceSetId) among the two SRS resource sets, and the second SRS resource set is an SRS resource set with a higher set ID value among the two SRS resource sets.

For example, the first SRS resource set is associated with CG PUSCH 1 and DG PUSCH 2, where the priority indexes of PUSCH 1 and PUSCH 2 are 1 and 0 respectively, and the second SRS resource set is associated with CG PUSCH 3, with a priority index of 0, then PUSCH 1 and PUSCH 3 can be transmitted simultaneously.

For another example, the first SRS resource set is associated with CG PUSCH 1 and DG PUSCH 2, where the priority indexes of PUSCH 1 and PUSCH 2 are 1 and 0 respectively, and the second SRS resource set has no associated PUSCH, then PUSCH 1 can be transmitted.

If prioLowDG-HighCG is configured, when multiple DG PUSCHs and/or multiple CG PUSCHs overlap, the UE transmits 2 CG PUSCHs associated with different SRS resource sets (if each SRS resource set is associated with CG PUSCH) or 1 CG PUSCH (if all CG PUSCHs are associated with the same SRS resource set).

If prioHighDG-LowCG is configured, when multiple DG PUSCHs and/or multiple CG PUSCHs overlap, the UE transmits 2 DG PUSCHs associated with different SRS resource sets (if each SRS resource set is associated with a DG PUSCH) or 1 DG PUSCH (if all DG PUSCHs are associated with the same SRS resource set).

Mode 1-2': according to relevant technologies, a first PUSCH with the highest priority is selected for transmission. For example, the first PUSCH is DG PUSCH 1 with a larger priority index, and then a second PUSCH with the highest priority is selected for transmission from PUSCHs associated with a SRS resource set different from that of the first PUSCH.

For example, the first PUSCH is associated with the second SRS resource set, and then a second PUSCH with the highest priority is selected for transmission from PUSCHs associated with the first SRS resource set, according to relevant technologies.

Mode 1-3': if there are two different priority indices, the UE selects one or more PUSCHs associated with different SRS resource sets for transmission from PUSCHs with a larger priority index.

For example, the first SRS resource set is associated with CG PUSCH 1 and DG PUSCH 2, where the priority indexes of PUSCH 1 and PUSCH 2 are 1 and 0 respectively, and the second SRS resource set is associated with CG PUSCH 3, with a priority index of 0, then PUSCH 1 can be transmitted.

The beneficial effects of this solution are to ensure that services with higher priority can be transmitted while reducing transmission of low-priority services, thereby increasing transmission reliability of high priority service (less inter-layer interference or inter-stream interference).

If prioLowDG-HighCG is configured, when multiple DG PUSCHs and/or multiple CG PUSCHs overlap, the UE selects one or two CG PUSCHs associated with two SRS resource sets from multiple CG PUSCHs for transmission. If multiple CG PUSCHs are associated with different SRS resource sets, the UE selects one CG PUSCH associated with each SRS resource set. If one SRS resource set is associated with more than one CG PUSCH, the UE selects a PUSCH with a lower CG index (corresponding to the high-layer parameter ConfiguredGrantConfigIndex) from multiple CG PUSCHs for transmission, or the UE does not expect one SRS resource set to be associated with multiple CG PUSCHs; if multiple CG PUSCHs are all associated with the same SRS resource set, the UE selects one CG PUSCH for transmission, and the CG PUSCH may be a PUSCH with a lower CG index from multiple CG PUSCHs.

If prioHighDG-LowCG is configured, when multiple DG PUSCHs and/or multiple CG PUSCHs overlap, the UE selects one or two DG PUSCHs associated with two SRS resource sets for transmission from multiple DG PUSCHs. If multiple DG PUSCHs are associated with different SRS resource sets, the UE selects one DG PUSCH associated with each SRS resource set, and the UE does not expect one SRS resource set to be associated with multiple DG PUSCHs; if multiple DG PUSCHs are associated with the same SRS resource set, the UE selects one DG PUSCH for transmission.

Mode 2': which PUSCHs can be transmitted or cancelled is determined according to the SRS resource set and the number of transmission layers.

This solution is applicable when the priorities of various physical channels are not distinguished, for example, when DCI does not include an indication of a priority index, and one or more PUSCH transmissions are determined according to the SRS resource set and the number of transmission layers, so that the determined PUSCHs can be transmitted simultaneously by the UE.

For example, the number of transmission layers of each PUSCH is N1, and the total number of PUSCH layers that can be transmitted simultaneously is N. For each UE, N is subject to certain capability restrictions, such as N=4, 6 or 8 or other threshold values.

The UE selects a PUSCH transmission from PUSCH associated with each SRS resource set so that the PUSCH transmission satisfies at least one of the following conditions:
Condition 1: the number of transmitted PUSCHs is the largest, such as each SRS resource set has an associated PUSCH transmitted;
Condition 2: a total number N of PUSCH layers does not exceed the UE capability;
Condition 3: a total number of layers of multiple PUSCH transmissions is the maximum.

When transmission needs to meet multiple conditions, the order of the multiple conditions also needs to be determined in advance to ensure that the PUSCH determined by the network side and the UE is the same.

For example, the determination is made in the order of conditions 1, 2, and 3. The first SRS resource set is associated with CG PUSCH 1 and DG PUSCH 2, where the transmission layers of PUSCH 1 and PUSCH 2 are 2 and 3 respectively; and the second SRS resource set is associated with CG PUSCH 3, and its number of transmission layers is 2. Since the second SRS resource set is associated with 1 PUSCH, according to the condition 1, the UE determines that PUSCH 3 can be transmitted; according to the condition 2, CG PUSCH 1 associated with the first SRS resource set can also be transmitted.

For another example, when DG PUSCH is scheduled for transmission and the UE is allowed to transmit CG PUSCH, the starting time (including the starting time of PDCCH that schedules or activates PUSCH) or end time of DG PUSCH or CG PUSCH can be used as a condition, such as condition 4; or, comparing with CG type 1 PUSCH, prioritized transmission of DG PUSCH or CG type 2 PUSCH is as a condition, such as condition 5. In this way, transmission can be performed according to the latest scheduling on the network side. That is, if the network side does not want to transmit DG PUSCH or CG type 2 PUSCH, DG PUSCH or CG type 2 PUSCH will not be scheduled during CG type 1 transmission.

In this embodiment, the order of the conditions is not limited, and there can be multiple order combinations.

Mode 3': which PUSCHs can be transmitted or cancelled is determined according to the priority index, the number of transmission layers and SRS resource set.

For example, a PUSCH transmission with the highest priority (first PUSCH) is determined based on relevant technologies or priority indexes, and then whether there is a second PUSCH transmission is determined according to the number of transmission layers and SRS resource set. For example, the second PUSCH needs to meet at least two of the following conditions:
Condition A: a PUSCH associated with a SRS resource set different from that of the first PUSCH;
Condition B: PUSCH with a number of layers not exceeding a certain value;
Condition C: PUSCH for which a sum of its number of transmission layers and that of the first PUSCH does not exceed a specific value;
Condition D: there is a PUSCH with a higher priority or priority index value except the first PUSCH.

When transmission needs to meet multiple conditions, the order of the multiple conditions also needs to be determined in advance to ensure that the PUSCH determined by the network side and the UE is the same.

### Embodiment 5

In this embodiment, which PUSCHs can be transmitted or cancelled is determined according to the SRS resource set or transmission scheme associated with the PUSCH and the priority index.

When S-DCI is used for transmitting multiple PUSCHs simultaneously, the network side can also configure two SRS resource sets for the UE. Different data streams or the same data stream of each DG PUSCH or CG PUSCH are associated with different SRS resource sets. Therefore, whether it can be transmitted can be determined based on the number of SRS resource sets associated with the PUSCH or the transmission scheme.

Mode 5-1: if the PUSCH is associated with 2 SRS resource sets and is configured for SDM transmission or SFN transmission, and overlaps with other PUSCHs, the PUSCH can be transmitted.

Other PUSCHs may be PUSCHs associated with one SRS resource set (for example, UE uses a single panel for transmission), or PUSCHs associated with two SRS resource sets but not configured for SDM or SFN transmission (PUSCH performs TDM-based repeated transmission at this time). When PUSCH is associated with two SRS resource sets, it is used to improve transmission reliability, so it should have a higher priority than other PUSCHs. In addition, if TDM-based repeated transmission is performed for PUSCH, although the transmission scheme is also used to improve transmission reliability at this time, since PUSCH has multiple transmission occasions in the time domain, even if one transmission occasions overlaps with SDM-based or SFN-based PUSCH, other transmission occasions can still be transmitted. Therefore, when PUSCH is associated with two SRS resource sets and is configured for SDM transmission or SFN transmission, and overlaps with other PUSCHs, only the PUSCH is transmitted, and other PUSCHs are not transmitted, or the transmission of other PUSCHs is canceled.

The beneficial effect of determining which PUSCHs can be transmitted according to the transmission scheme is to give higher priority to simultaneous transmissions, ensuring that they can be transmitted, thereby increasing the reliability of PUSCH transmissions.

Mode 5-2: the UE does not expect to be scheduled to transmit the following multiple PUSCHs simultaneously, that is, it does not expect to be scheduled to transmit the following multiple PUSCHs simultaneously:

when the priority index is not configured or indicated, or the parameter prioLowDG-HighCG or prioHighDG-LowCG is not configured, or the high-layer parameter coresetPoolIndex is not configured, the UE does not expect to transmit multiple scheduled PUSCHs for SDM or SFN transmission at the same time, or transmit one scheduled PUSCH for SDM or SFN at the same time, and other PUSCHs for single panel transmission or TDM-based repeated transmission or CG PUSCH transmission (i.e., PUSCH transmission associated with 1 SRS resource set, or PUSCH associated with 2 SRS resource sets but not configured for SDM transmission or SFN transmission).

When configuring the higher layer parameter coresetPoolIndex, the UE does not expect a scheduled PUSCH to be associated with two SRS resource sets, or a PUSCH to be configured for SDM or SFN transmission.

The beneficial effects of this solution are to simplify the scheduling on the network side, avoiding that the scheduled PUSCH exceeds the UE capability, and also simplifying the PUSCH determination process, that is, all scheduled PUSCHs can be transmitted by the UE.

### Mode 5-3:

When SDM or SFN transmission is configured, only one PUSCH is transmitted, and which PUSCH can be transmitted is determined based on the priority index value of each PUSCH, or the parameter prioLowDG-HighCG or prioHighDG-LowCG. For example, a PUSCH with a larger priority index value can be transmitted, regardless of whether the transmission scheme of the PUSCH is SDM, SFN, TDM or single panel transmission. For another example, when the parameter prioLowDG-HighCG is configured, the CG PUSCH (with a larger priority index) is transmitted, and transmission of other PUSCHs is canceled; when the parameter prioHighDG-LowCG is configured, DG PUSCH (with a larger priority index) is transmitted, and transmission of other PUSCHs is canceled.

### Mode 5-4:

Even if the high-layer parameter coresetPoolIndex is not configured, multiple PUSCHs (of the same serving cell) can be transmitted simultaneously (so-called simultaneous transmission means that multiple PUSCHs overlap in time and can all be transmitted) if the multiple PUSCHs meet at least one of the following conditions:
Condition 1: multiple PUSCHs are associated with different SRS resource sets;
Condition 2: a sum of the number of layers of multiple PUSCHs does not exceed the UE capability;
Condition 3: multiple PUSCHs have different priority index values;
Condition 4: multiple PUSCHs have different types (such as DG PUSCH, CG type 1 PUSCH or CG type 2 PUSCH);
Condition 5: each PUSCH has a single TCI state or is not configured with SDM or SFN transmission.

In addition, if there are two different priority indexes, the UE expects that one priority index is always associated with one coresetPoolIndex value, the UE transmits PUSCH corresponding to the high priority index, and cancels PUSCH associated with the other TRP (coresetPoolIndex value).

### Embodiment 6

In some cases, if the network side does not configure or indicate different priorities for different channels (PUCCH or PUSCH) of the UE, or for different channels with the same priority, the UE handles the conflict between PUCCH and PUSCH according to the following order:
First, the UE solves the overlapping problem of repeated PUCCH transmissions;
Second, the UE solves the overlapping problem of PUCCH without repeated transmission;
Third, the UE solves the overlapping problem of repeated transmission of PUSCH and PUCCH;
Fourth, the UE solves the overlap problem of PUSCH and PUCCH without repeated transmission.

Therefore, it is necessary to consider the overlap with PUCCH when more than one PUSCH is transmitted simultaneously. For example, PUCCH may overlap with one PUSCH and meet the multiplexing condition or discard condition. Therefore, it is necessary to clarify when to determine that at most two PUSCHs are transmitted simultaneously. The following two modes can be considered:

Mode 1: after the fourth step (after solving the conflict between PUCCH and PUSCH according to the relevant technology), at most 2 PUSCHs are selected for transmission according to the embodiments 1 to 5.

Mode 2: after the second step or before the third step (including before the first step, before solving the conflict between PUCCH and PUSCH according to the relevant technology), at most 2 PUSCHs are selected for transmission according to the embodiments 1 to 5.

The execution time of the embodiment 1 and the embodiment 5 will affect the number of PUSCHs that the system can eventually transmit. For example, if two PUSCH transmissions are determined after the fourth step, both of the determined two PUSCHs can be transmitted; if two PUSCHs are determined for transmission after the second step, the number of PUSCHs that are finally transmitted may be less than two after the third and fourth steps of solving the conflicts. Both of the above modes are possible, but a common understanding between the network side and the UE is required, otherwise the PUCCH and/or PUSCH that can be transmitted determined by the network side may be inconsistent with the UE's understanding, resulting in errors of PUCCH/PUSCH transmission. Therefore, the execution time of the embodiment 1 to the embodiment 5 needs to be pre-specified in the protocol.

If the network side configures or indicates different priorities for different channels (PUCCH or PUSCH) of the UE, the overlap between PUCCH and/or PUSCH with the same priority is solved first, and then the overlap between PUCCH and/or PUSCH with different priorities is solved. When solving the overlap between PUCCH and/or PUSCH with different priorities, the conflict between high priority and low-priority PUCCHs is handled first, and then the conflict between PUCCH and PUSCH with different priorities is handled. Similar to the processing order for the same priority, it is necessary to clarify when to determine at most 2 PUSCHs that are transmitted simultaneously. The following four modes can be considered:

Mode 1: considering the problem of transmitting at most 2 PUSCHs simultaneously before dealing with the overlap of PUCCH and/or PUSCH with the same priority (i.e., first selecting 2 PUSCHs for transmission, and then solving the overlap/conflict between PUCCH and PUSCH).

Mode 2: considering the problem of transmitting at most 2 PUSCHs simultaneously after dealing with the overlap of PUCCH and/or PUSCH with the same priority (i.e., first solving the overlap/conflict between PUCCH and PUSCH, and then selecting at most 2 PUSCHs from the determined multiple PUSCHs for transmission).

Mode 3: considering the problem of transmitting at most 2 PUSCHs simultaneously before dealing with the conflict between PUCCH and PUSCH with different priorities (i.e., first selecting 2 PUSCHs for transmission, then solving the overlap/conflict between PUCCH and PUSCH).

Mode 4: considering the problem of transmitting at most 2 PUSCHs simultaneously after dealing with the conflicts between PUCCH and PUSCH with different priorities, (i.e., first solving the overlap/conflict between PUCCH and PUSCH, and then selecting at most 2 PUSCHs from the determined multiple PUSCHs for transmission).

In order to ensure that the network side and the UE have the same understanding of PUCCH/PUSCH that can be transmitted, it is necessary to specify in the protocol that one of the modes 1-4 is used to determine when to determine at most 2 PUSCHs for transmission.

### Embodiment 7

When the UE is not configured or indicated with priority or priority index (such as DCI does not include a priority index indication, or the high-layer parameters prioLowDG-HighCG or prioHighDG-LowCG are not configured), or multiple PUSCHs have the same priority index, the number of DG PUSCHs scheduled by the network side or activated type 2 CG PUSCHs, and the number of type 1 CG PUSCHs sent by the UE, do not exceed the UE capability, such as no more than 2.

For example, when the network schedules 2 DG PUSCHs, if the terminal wants to send CG PUSCH, it needs to meet a certain time interval with the 2 PUSCHs scheduled by the network. In some technologies, a start symbol of CG PUSCH needs to be at least N2 symbols after an end symbol of PDCCH that schedules DG PUSCH, before CG PUSCH can be sent, that is, the end symbol of PDCCH must be N2 symbols earlier than the start symbol of CG PUSCH. In simultaneous uplink transmission, there are multiple PUSCHs transmitted simultaneously, and it is necessary to clarify which PUSCH's scheduling PDCCH has a certain time interval with the start symbol of CG PUSCH. The following two modes can be considered:

Mode 1: the start symbol of CG PUSCH (also called the third CG PUSCH) is N2 symbols later than an end symbol of PDCCH that schedules PUSCH and ends later. That is, the UE does not expect the end symbol of PDCCH that schedules PUSCH and ends later to be no earlier than N2 symbols earlier than the start symbol of CG PUSCH, as shown in FIG. 3.

The beneficial effect of this solution is that it can ensure that the UE has sufficient preparation time for CG PUSCH, that is, the interval between CG PUSCH and PDCCH for scheduling 2 DG PUSCHs is greater than N2, thereby avoiding that the preparation time of UE for processing multiple PUSCHs (including DG PUSCH and CG PUSCH) exceeds the UE capability.

Mode 2: the start symbol of CG PUSCH (also called the third CG PUSCH) is N2 symbols later than an end symbol of PDCCH for scheduling PUSCH associated with the same coresetPoolIndex value or the same SRS resource set. That is, the UE does not expect that the end symbol of the scheduling PDCCH for a PUSCH associated with the same CORESET pool index value or the same SRS resource set as the third CG PUSCH ends earlier than N2 symbols before the starting symbol of the third PUSCH, as illustrated in FIG. 4.

The beneficial effect of this solution is that when the UE has multiple antenna panels, PUSCH can be prepared separately for the scheduling of each TRP, and it is only necessary to ensure that the processing time of multiple PUSCHs corresponding to the same antenna panel does not exceed the UE capability.

The parameter coresetPoolIndex associated with PUSCH refers to the high-layer parameter configured in the CORESET where the PDCCH for scheduling PUSCH or activating type 2 CG PUSCH is located during the scheduling process of DG PUSCH, or the coresetPoolIndex associated with the SRS resource set configured for type 1 CG PUSCH, such as the first SRS resource set is associated with the coresetPoolIndex value 0, and the second SRS resource set is associated with the coresetPoolIndex value 1. The definitions of the first SRS resource set and the second SRS resource set are consistent with those in the embodiment 4. The SRS resource set associated with PUSCH refers to that when precoding is indicated for PUSCH, specifically for DG PUSCH and Type 2 CG PUSCH, the associated SRS resource set is an SRS resource set associated with the high-layer parameter coresetPoolIndex of the CORESET where the scheduling PDCCH or activating PDCCH is transmitted; for type 1 CG PUSCH, the associated SRS resource set refers to an associated SRS resource set configured for CG PUSCH through RRC signaling.

In addition, the two DG PUSCHs can also be replaced by two type 2 CG PUSCHs, or one DG PUSCH and one type 2 CG PUSCH. For type 2 CG PUSCH, the PDCCH is PDCCH that activates the type 2 CG PUSCH.

When the network side schedules or activates 2 DG PUSCHs and/or type 2 CG PUSCHs, if the UE wants to send 2 CG PUSCHs, it can execute the mode 1 and mode 2 for each CG PUSCH respectively.

When the network side schedules or activates one DG PUSCH or one type 2 CG PUSCH, the UE can also send a CG PUSCH (type 1 CG PUSCH or type 2 CG PUSCH), and the CG PUSCH needs to be associated with a different coresetPoolIndex value or a different SRS resource set with the PUSCH scheduled or activated by the network side to ensure that both PUSCHs can be sent at the same time, that is, the modes of the embodiments 1 to 7 can be referred to.

In addition, in order to simplify the processing flow, when M-DCI is used (i.e., when configuring the high-layer parameter coresetPoolIndex), the UE expects all PUSCHs to have the same priority. At this time, only the momde in the embodiment 7 needs to be executed, and the priority comparison process related to the priority index is not involved, which simplifies the system design. In addition, M-DCI is a solution for throughput improvement, and priority index is used to transmit high priority URLLC services. The two features can also be configured separately.

### Embodiment 8

When multiple PUSCHs are determined to be transmitted before processing the conflict between PUCCH and PUSCH, UCI in the PUCCH can be multiplexed to one of the PUSCHs for transmission. When carrier aggregation is not considered, in some technologies, the UE is allowed to transmit only one PUSCH in a time unit. When carrier aggregation is considered, each cell can transmit one PUSCH. At this time, the UE selects a PUSCH for UCI multiplexing (also called PUSCH selection process) according to the following priority order: PUSCH carrying non-periodic CSI reporting>DG PUSCH>PUSCH with the smallest cell index value (parameter ServCellIndex)>PUSCH transmitted earliest in the slot.

When performing uplink simultaneous transmission, simultaneous transmission of up to 2 PUSCHs can be performed for each cell. When performing PUSCH selection, how to consider the impact of simultaneous PUSCH transmission is a problem. Taking FIG. 5 as an example, cell 1 transmits CG PUSCH 1, and cell 3 transmits DG PUSCH 1 and CG PUSCH 2. If the network side and the UE use different PUSCH selection criterias, PUSCHs selected by the two may be inconsistent, which in turn causes the network side to be unable to correctly receive the PUSCH. Therefore, it is necessary to define the PUSCH selection process, and consider the following modes:

Mode 1: the UE jointly selects PUSCHs that are transmitted simultaneously. If a PUSCH is selected in one step, another PUSCH (transmitted in the same cell and associated with a different coresetPoolIndex value or a different SRS resource set) is also selected accordingly.

For example, in some technologies, the network side prioritizes PUSCH carrying aperiodic CSI reports for multiplexing. If no PUSCH carries aperiodic CSI reports, the UE proceeds to the second step of the comparison process, which involves selecting DG PUSCH for UCI multiplexing. In FIG. 5, DG PUSCH 1 is prioritized and selected. According to the mode 1, CG PUSCH 2, which is transmitted simultaneously with DG PUSCH 1, is also selected.

Subsequently, according to the coresetPoolIndex value and the coresetPoolIndex value associated with PUCCH corresponding to the UCI, the UE can multiplex UCI onto PUSCH with the same coresetPoolIndex value associated with it for transmission.

The beneficial effect of this solution is to ensure that UCI is associated with the same coresetPoolIndex value as the PUSCH it multiplexes, thereby ensuring that UCI does not change its association with TRP during the multiplexing process, that is, ensuring that UCI can still be sent to the target TRP according to the predetermined (or indicated) TCI state.

Mode 2: the UE processes the simultaneously transmitted PUSCHs as two independent PUSCHs and selects PUSCH according to the priority specified in the relevant technology. If PUSCH finally selected is one of the simultaneously transmitted PUSCHs, the PUSCH associated with it can also be used as a candidate PUSCH for UCI multiplexing.

The difference from the mode 1 is that the mode 1 treats the simultaneously transmitted PUSCHs as a whole in each step of PUSCH selection, while the mode 2 treats the PUSCHs as a whole only in the last step.

The beneficial effects of this solution are that the priority of PUSCH defined in the protocol is not changed, simultaneous transmission is considered in the last step, and the priority of other PUSCH is not preempted.

Mode 3: according to the coresetPoolIndex value, PUSCHs are divided into two groups, such as PUSCHs with a coresetPoolIndex value of 0 are divided into one group, and PUSCHs with a coresetPoolIndex value of 1 are divided into one group. According to the coresetPoolIndex value associated with the PUCCH corresponding to the UCI, a PUSCH group is selected for UCI multiplexing.

For example, if the coresetPoolIndex value of the PUCCH associated with the UCI is 0, the UE selects a PUSCH for UCI multiplexing from PUSCHs associated with the coresetPoolIndex value of 0, according to the rules in the relevant technology.

The beneficial effect of this solution is to ensure that the UCI and the selected PUSCH are associated with the same TRP, thereby ensuring that the UCI can be sent to the target TRP using the original beam direction (TCI state).

The uplink transmission method provided in the embodiment of the present disclosure may be applied to a UE to determine one or more PUSCHs that may be transmitted simultaneously during S-DCI or M-DCI scheduling.

In the embodiment of the present disclosures, it can ensure that PUSCHs determined by the network side and the UE to be transmitted simultaneously are consistent, thereby avoiding the failure of the network side to receive the PUSCH.

Referring to FIG. 6, FIG. 6 is a schematic diagram of a user equipment (UE) according to one embodiment of the present disclosure. As shown in FIG. 6, the user equipment includes a memory 620, a transceiver 600, and a processor 610.

The memory 620 is used to store a computer program; the transceiver 600 is used to send and receive data under the control of the processor 610. The processor 610 is used to read the computer program in the memory 620 and perform the following operations:
obtaining parameter information corresponding to multiple PUSCHs; where the parameter information includes at least one of the following: resource set information, number of transmission layers, priority information, or transmission scheme;
determining N PUSCHs for transmission from the multiple PUSCHs which are overlapped based on the parameter information; where N is an integer greater than or equal to 1.

It is to be noted that the above parameter information corresponding to the multiple PUSCHs may be parameter information corresponding to the multiple PUSCHs respectively. In FIG. 6, a bus architecture may include any number of interconnected bus and bridge. Specifically, various circuits of one or more processors, which are represented by the processor 610, and one or more memories, which are represented by the memory 620, are linked together. The bus architecture may link various other circuits, such as a peripheral device, voltage regulator and a power management circuit together. These features are well known in this field; therefore, this disclosure does not make further description on these features. The bus interface provides an interface. The transceiver 600 may be multiple elements, including a transmitter and a receiver and provide units, which communicate with other devices on the transmission medium. The transmission medium includes radio channels, wired channels, optical cables, etc.

The processor 610 is responsible for managing the bus architecture and the normal processing. The memory 620 may be used to store data used by the processor 610 for performing operations.

Optionally, the processor 610 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any method provided in the embodiment of the present disclosure according to obtained executable instructions. The processor and the memory may also be arranged physically separately.

In some embodiments, the parameter information includes: resource set information and priority information corresponding to each PUSCH, where the resource set information includes resource set parameters associated with each PUSCH in the multiple PUSCHs.

The determining N PUSCHs for transmission from the multiple PUSCHs based on the parameter information, includes:
selecting, based on the parameter information and according to a first selection rule, N PUSCHs from the multiple PUSCHs for transmission; where the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; where the other resource set parameter is a resource set parameter other than the resource set parameter associated with the first PUSCH;
selecting N PUSCHs from PUSCHs of a first priority for transmission; where when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; where the first priority is the highest priority among priorities of the multiple PUSCHs, and N1 is an integer less than N and greater than 1;
maximizing the number of selected PUSCHs; or
maximizing a sum of priority indices of selected PUSCHs.

In some embodiments, the parameter information includes resource set information and a number of transmission layers of each PUSCH, where the resource set information includes resource set parameters associated with each PUSCH in the multiple PUSCHs.

The determining N PUSCHs for transmission from the multiple PUSCHs which are overlapped based on the parameter information, includes:
determining, based on the parameter information and according to a second selection rule, N PUSCHs from the multiple PUSCHs for transmission; where the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

In some embodiments, the second selection rule includes multiple items of: maximizing the number of selected PUSCHs, the total number of transmission layers of selected PUSCHs not exceeding the transmission capability of the user equipment, or maximizing the total number of transmission layers of selected PUSCHs.

The selecting, based on the parameter information and according to a second selection rule, N PUSCHs for transmission from the multiple PUSCHs, includes:
selecting, by the user equipment, N PUSCHs for transmission from the multiple PUSCHs, based on the parameter information and according to the second selection rule as well as a predefined order of multiple items included in the second selection rule.

In some embodiments, the parameter information includes: resource set information, the number of transmission layers of each PUSCH and priority information corresponding to each PUSCH, where the resource set information includes resource set parameters associated with each PUSCH in the multiple PUSCHs.

The determining N PUSCHs for transmission from the multiple PUSCHs which are overlapped based on the parameter information, includes:
selecting, based on the parameter information, a third PUSCH for transmission from the multiple PUSCHs, and selecting a fourth PUSCH for transmission from the multiple PUSCHs;
where the third PUSCH includes at least one of the following:
PUSCH with the highest priority;
PUSCH with a resource set parameter of a specific value;
PUSCH with a number of transmission layers of a specific value; or
PUSCH with a specific type;
where the fourth PUSCH satisfies a target condition, and the target condition includes at least one of the following conditions:
being different from resource set parameters associated with the third PUSCH;
the number of transmission layers not exceeding a first value, where the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

In some embodiments, the resource set parameters may include:
high-layer parameters related to control resource set or SRS resource set index.

In some embodiments, the priority information includes at least one of the following:
a priority index, a first high-layer parameter, and a second high-layer parameter; where the first high-layer parameter is used to indicate that a priority of dynamic grant is lower than a priority of configured grant, and the second high-layer parameter is used to indicate that a priority of dynamic grant is higher than the priority of the configured grant.

In some embodiments, the parameter information includes resource set information and a transmission scheme of each PUSCH, where the resource set information includes an SRS resource set associated with each PUSCH.

The determining N PUSCHs for transmission from the multiple PUSCHs which are overlapped based on the parameter information, includes:
when of a fifth PUSCH among the multiple PUSCHs overlap with those of other PUSCHs in time, selecting the fifth PUSCH for transmission; where the fifth PUSCH is associated with at least two SRS resource sets, and the fifth PUSCH is configured for SDM transmission or SFN transmission, and the other PUSCHs are PUSCHs among the multiple PUSCHs except the fifth PUSCH, such as a single-transmission PUSCH, or repetition transmission based on time division multiplexing (TDM).

In some embodiments, when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

In some embodiments, the multiple PUSCHs include at least one of the following:
at least one DG-PUSCH and at least one CG-PUSCH.

In some embodiments, the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

In some embodiments, the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
where the uplink transmission includes at least one of the following: PUSCH and PUCCH.

In some embodiments, after selecting N PUSCHs for transmission from the multiple PUSCHs, the method further includes at least one of the following:
performing overlapping processing of uplink transmissions with the same priority;
performing overlapping processing of uplink transmissions with different priorities; or
performing overlap processing of uplink transmission;
where the uplink transmission includes at least one of the following: PUSCH and PUCCH.

In some embodiments, the processor 610 is further used to:
transmit a sixth PUSCH;
where a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

In some embodiments, the processor 610 is further used to:
select, according to a third selection rule, PUSCH for UCI multiplexing transmission; where the third selection rule includes at least one of the following:
PUSCHs that overlap in time in a cell are as a whole for selection;
at least one PUSCH is selected for UCI multiplexing from PUSCHs associated with same resource set parameter as the UCI.

It is to be noted here that the above user equipment provided in the embodiment of the present disclosure can implement all the method steps implemented in the above method embodiment, and can achieve the same technical effect. The parts and beneficial effects of this embodiment that are the same as the method embodiment will not be described in detail here.

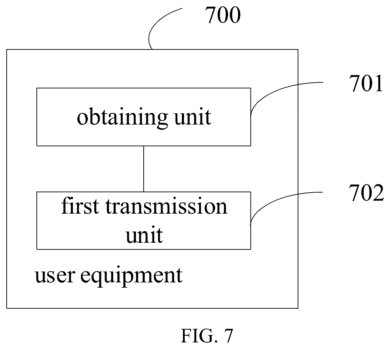

Referring to FIG. 7, FIG. 7 is a schematic diagram of a user equipment (UE) according to one embodiment of the present disclosure. As shown in FIG. 7, the user equipment 700 includes:
an obtaining unit 701 used to obtain parameter information corresponding to multiple PUSCHs; where the parameter information includes at least one of the following: resource set information, number of transmission layers, priority information, or transmission scheme;
a first transmission unit 702 used to determine N PUSCHs for transmission from the multiple PUSCHs which are overlapped based on the parameter information; where N is an integer greater than or equal to 1.

In some embodiments, the parameter information includes: resource set information and priority information corresponding to each PUSCH, where the resource set information includes resource set parameters associated with each PUSCH in the multiple PUSCHs.

The obtaining unit 701 is used to select, based on the parameter information and according to a first selection rule, N PUSCHs from the multiple PUSCHs for transmission; where the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; where the other resource set parameter is a resource set parameter other than the resource set parameter associated with the first PUSCH;
selecting N PUSCHs from PUSCHs of a first priority for transmission; where when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; where the first priority is the highest priority among priorities of the multiple PUSCHs, and N1 is an integer less than N and greater than 1;
maximizing the number of selected PUSCHs; or
maximizing a sum of priority indices of selected PUSCHs.

In some embodiments, the parameter information includes resource set information and a number of transmission layers of each PUSCH, where the resource set information includes resource set parameters associated with each PUSCH in the multiple PUSCHs.

The obtaining unit 701 is used to determine, based on the parameter information and according to a second selection rule, N PUSCHs from the multiple PUSCHs for transmission; where the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

In some embodiments, the second selection rule includes multiple items of: maximizing the number of selected PUSCHs, the total number of transmission layers of selected PUSCHs not exceeding the transmission capability of the user equipment, or maximizing the total number of transmission layers of selected PUSCHs.

The obtaining unit 701 is used to select N PUSCHs for transmission from the multiple PUSCHs, based on the parameter information and according to the second selection rule as well as a predefined order of multiple items included in the second selection rule.

In some embodiments, the parameter information includes: resource set information, the number of transmission layers of each PUSCH and priority information corresponding to each PUSCH, where the resource set information includes resource set parameters associated with each PUSCH in the multiple PUSCHs.

The obtaining unit 701 is used to select, based on the parameter information, a third PUSCH for transmission from the multiple PUSCHs, and selecting a fourth PUSCH for transmission from the multiple PUSCHs;
where the third PUSCH includes at least one of the following:
PUSCH with the highest priority;
PUSCH with a resource set parameter of a specific value;
PUSCH with a number of transmission layers of a specific value; or
PUSCH with a specific type;
where the fourth PUSCH satisfies a target condition, and the target condition includes at least one of the following conditions:
being different from resource set parameters associated with the third PUSCH;
the number of transmission layers not exceeding a first value, where the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

In some embodiments, the resource set parameters may include:
high-layer parameters related to control resource set or SRS resource set index.

In some embodiments, the priority information includes at least one of the following:
a priority index, a first high-layer parameter, and a second high-layer parameter; where the first high-layer parameter is used to indicate that a priority of dynamic grant is lower than a priority of configured grant, and the second high-layer parameter is used to indicate that a priority of dynamic grant is higher than the priority of the configured grant.

In some embodiments, the parameter information includes resource set information and a transmission scheme of each PUSCH, where the resource set information includes an SRS resource set associated with each PUSCH.

The obtaining unit 701 is used to, when a fifth PUSCH among the multiple PUSCHs overlap with those of other PUSCHs in time, select the fifth PUSCH for transmission; where the fifth PUSCH is associated with at least two SRS resource sets, and the fifth PUSCH is configured for SDM transmission or SFN transmission, and the other PUSCHs are PUSCHs among the multiple PUSCHs except the fifth PUSCH, such as a single-transmission PUSCH, or repetition transmission based on time division multiplexing (TDM).

In some embodiments, when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

In some embodiments, the multiple PUSCHs include at least one of the following:
at least one DG-PUSCH and at least one CG-PUSCH.

In some embodiments, the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

In some embodiments, the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
where the uplink transmission includes at least one of the following: PUSCH and PUCCH.

In some embodiments, after selecting N PUSCHs for transmission from the multiple PUSCHs, the device further includes at least one of the following:
a first execution unit used to perform overlapping processing of uplink transmissions with the same priority;
a second execution unit used to perform overlapping processing of uplink transmissions with different priorities; or
a third execution unit used to perform overlap processing of uplink transmission;
where the uplink transmission includes at least one of the following: PUSCH and PUCCH.

In some embodiments, the user equipment further includes:
a second transmission unit used to transmit a sixth PUSCH;
where a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

In some embodiments, the user equipment further includes:
a selection unit used to select, according to a third selection rule, PUSCH for UCI multiplexing transmission; where the third selection rule includes at least one of the following:
PUSCHs that overlap in time in a cell are as a whole for selection;
at least one PUSCH is selected for UCI multiplexing from PUSCHs associated with same resource set parameter as the UCI.

It is to be noted here that the above user equipment provided in the embodiment of the present disclosure can implement all the method steps implemented in the above method embodiment, and can achieve the same technical effect. The parts and beneficial effects of this embodiment that are the same as the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which stores a computer program, and the computer program is used to cause a processor to execute the data forwarding method provided in the present disclosure; or, which is used to cause the processor to execute the multicast address configuration method on the user equipment side provided in the present disclosure; or, which is used to cause the processor to execute the multicast address configuration method on the SMF side provided in the present disclosure.

In some embodiments, the above processor-readable storage medium may be a non-transitory storage medium.

The processor-readable storage medium can be any available medium or data storage device that can be accessed by the processor, including but not limited to magnetic storage (such as floppy disks, hard disks, magnetic tapes, magneto-optical disks (MO), etc.), optical storage (such as compact disks (CD), digital video disks (DVD), Blu-ray Discs (BD), high-definition versatile disks (HVD), etc.), and semiconductor memory (such as read-only memory (ROM), erasable programmable read-only memory (EPROM), electrically erasable programmable read-only memory (EEPROM), non-volatile memory (NAND FLASH), solid-state disk (Solid State Disk or Solid State Drive, SSD)), etc.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present application are used to distinguish similar objects and are not necessarily used to describe a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An uplink transmission method, comprising:
obtaining, by a user equipment, parameter information corresponding to multiple physical uplink shared channels (PUSCH), respectively; wherein the parameter information includes at least one of the following: resource set information, a number of transmission layers, priority information, or transmission scheme; and
determining, by the user equipment, N PUSCHs for transmission from the multiple PUSCHs which are overlapped based on the parameter information; wherein N is an integer greater than or equal to 1.

2. The method according to claim 1, wherein the parameter information includes: resource set information and priority information corresponding to each PUSCH; and the resource set information includes resource set parameters associated with each PUSCH in the multiple PUSCHs;
the determining, by the user equipment, N PUSCHs for transmission from the multiple PUSCHs which are overlapped based on the parameter information, includes:
selecting, by the user equipment, based on the parameter information and according to a first selection rule, N PUSCHs from the multiple PUSCHs for transmission; wherein the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; wherein the other resource set parameter is a resource set parameter other than the resource set parameter associated with the first PUSCH;
selecting N PUSCHs from PUSCHs of a first priority for transmission; wherein when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; wherein the first priority is the highest priority among priorities of the multiple PUSCHs, and N1 is an integer less than N and greater than 1;
maximizing the number of selected PUSCHs; or
maximizing a sum of priority indices of selected PUSCHs.

3. The method according to claim 1, wherein the parameter information includes resource set information and a number of transmission layers of each PUSCH, wherein the resource set information includes resource set parameters associated with each PUSCH in the multiple PUSCHs;
the determining, by the user equipment, N PUSCHs for transmission from the multiple PUSCHs which are overlapped based on the parameter information, includes:
determining, by the user equipment, based on the parameter information and according to a second selection rule, N PUSCHs from the multiple PUSCHs for transmission; wherein the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

4. The method according to claim 3, wherein the second selection rule includes multiple items of: maximizing the number of selected PUSCHs, the total number of transmission layers of selected PUSCHs not exceeding the transmission capability of the user equipment, or maximizing the total number of transmission layers of selected PUSCHs;
the determining, by the user equipment, based on the parameter information and according to a second selection rule, N PUSCHs from the multiple PUSCHs for transmission, includes:
selecting, by the user equipment, N PUSCHs for transmission from the multiple PUSCHs, based on the parameter information and according to the second selection rule as well as a predefined order of multiple items included in the second selection rule.

5. The method according to claim 1, wherein the parameter information includes: resource set information, the number of transmission layers of each PUSCH and priority information corresponding to each PUSCH; and the resource set information includes resource set parameters associated with each PUSCH in the multiple PUSCHs;
the determining, by the user equipment, N PUSCHs for transmission from the multiple PUSCHs which are overlapped based on the parameter information, includes:
selecting, by the user equipment, based on the parameter information, a third PUSCH for transmission from the multiple PUSCHs, and selecting a fourth PUSCH for transmission from the multiple PUSCHs;
wherein the third PUSCH includes at least one of the following:
PUSCH with the highest priority;
PUSCH with a resource set parameter of a specific value;
PUSCH with a number of transmission layers of a specific value; or
PUSCH with a specific type;
wherein the fourth PUSCH satisfies a target condition, and the target condition includes at least one of the following conditions:
being different from resource set parameters associated with the third PUSCH;
the number of transmission layers not exceeding a first value, wherein the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

6. The method according to any one of claims 2 to 5, wherein the resource set parameters include:
high-layer parameters related to control resource set or SRS resource set index.

7. The method according to any one of claims 1 to 5, wherein the priority information includes at least one of the following:
a priority index, a first high-layer parameter, and a second high-layer parameter; wherein the first high-layer parameter is used to indicate that a priority of dynamic grant is lower than a priority of configured grant, and the second high-layer parameter is used to indicate that a priority of dynamic grant is higher than the priority of the configured grant.

8. The method according to claim 1, wherein the parameter information includes resource set information and a transmission scheme of each PUSCH, and the resource set information includes an SRS resource set associated with each PUSCH;
the determining, by the user equipment, N PUSCHs for transmission from the multiple PUSCHs which are overlapped based on the parameter information, includes:
when a fifth PUSCH among the multiple PUSCHs overlap with those of other PUSCHs in time, selecting, by the user equipment, the fifth PUSCH for transmission; wherein the fifth PUSCH is associated with at least two SRS resource sets, and the fifth PUSCH is configured for SDM transmission or SFN transmission, and the other PUSCHs are PUSCHs among the multiple PUSCHs except the fifth PUSCH.

9. The method according to claim 1, wherein when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

10. The method according to any one of claims 1 to 5, wherein the multiple PUSCHs include at least one of the following:
at least one DG-PUSCH and at least one CG-PUSCH.

11. The method according to any one of claims 1 to 5, wherein the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

12. The method according to any one of claims 1 to 5, wherein the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
wherein the uplink transmission includes at least one of the following: PUSCH and PUCCH.

13. The method according to any one of claims 1 to 5, wherein after selecting N PUSCHs for transmission from the multiple PUSCHs, the method further includes at least one of the following:
performing overlapping processing of uplink transmissions with the same priority;
performing overlapping processing of uplink transmissions with different priorities; or
performing overlap processing of uplink transmission;
wherein the uplink transmission includes at least one of the following: PUSCH and PUCCH.

14. The method according to any one of claims 1 to 5, wherein the method further includes:
transmit a sixth PUSCH;
wherein a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

15. The method according to any one of claims 1 to 5, wherein the method further includes:
select, according to a third selection rule, PUSCH for UCI multiplexing transmission;
wherein the third selection rule includes at least one of the following:
PUSCHs that overlap in time in a cell are as a whole for selection;
at least one PUSCH is selected for UCI multiplexing from PUSCHs associated with same resource set parameter as the UCI.

16. A user equipment (UE), comprising: a memory, a transceiver and a processor;
wherein the memory is used to store a computer program; the transceiver is used to send and receive data under the control of the processor; and the processor is used to read the computer program in the memory and perform the following operations:
obtaining parameter information corresponding to multiple physical uplink shared channels (PUSCH), respectively; wherein the parameter information includes at least one of the following: resource set information, number of transmission layers, priority information, or transmission scheme; and
determining N PUSCHs for transmission from the multiple PUSCHs which are overlapped based on the parameter information; wherein N is an integer greater than or equal to 1.

17. The user equipment according to claim 16, wherein the parameter information includes: resource set information and priority information corresponding to each PUSCH; and the resource set information includes resource set parameters associated with each PUSCH in the multiple PUSCHs;
the determining N PUSCHs for transmission from the multiple PUSCHs which are overlapped based on the parameter information, includes:
selecting based on the parameter information and according to a first selection rule, N PUSCHs from the multiple PUSCHs for transmission; wherein the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; wherein the other resource set parameter is a resource set parameter other than the resource set parameter associated with the first PUSCH;
selecting N PUSCHs from PUSCHs of a first priority for transmission; wherein when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter; wherein the first priority is the highest priority among priorities of the multiple PUSCHs, and N1 is an integer less than N and greater than 1;
maximizing the number of selected PUSCHs; or
maximizing a sum of priority indices of selected PUSCHs.

18. The user equipment according to claim 16, wherein the parameter information includes resource set information and a number of transmission layers of each PUSCH, wherein the resource set information includes resource set parameters associated with each PUSCH in the multiple PUSCHs;
the determining N PUSCHs for transmission from the multiple PUSCHs which are overlapped based on the parameter information, includes:
determining based on the parameter information and according to a second selection rule, N PUSCHs from the multiple PUSCHs for transmission; wherein the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

19. The user equipment according to claim 18, wherein the second selection rule includes multiple items of: maximizing the number of selected PUSCHs, the total number of transmission layers of selected PUSCHs not exceeding the transmission capability of the user equipment, or maximizing the total number of transmission layers of selected PUSCHs;
the determining, based on the parameter information and according to a second selection rule, N PUSCHs from the multiple PUSCHs for transmission, includes:
selecting N PUSCHs for transmission from the multiple PUSCHs, based on the parameter information and according to the second selection rule as well as a predefined order of multiple items included in the second selection rule.

20. The user equipment according to claim 16, wherein the parameter information includes: resource set information, the number of transmission layers of each PUSCH and priority information corresponding to each PUSCH; and the resource set information includes resource set parameters associated with each PUSCH in the multiple PUSCHs;
the determining N PUSCHs for transmission from the multiple PUSCHs which are overlapped based on the parameter information, includes:
selecting, based on the parameter information, a third PUSCH for transmission from the multiple PUSCHs, and selecting a fourth PUSCH for transmission from the multiple PUSCHs;
wherein the third PUSCH includes at least one of the following:
PUSCH with the highest priority;
PUSCH with a resource set parameter of a specific value;
PUSCH with a number of transmission layers of a specific value; or
PUSCH with a specific type;
wherein the fourth PUSCH satisfies a target condition, and the target condition includes at least one of the following conditions:
being different from resource set parameters associated with the third PUSCH;
the number of transmission layers not exceeding a first value, wherein the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

21. The user equipment according to any one of claims 17 to 20, wherein the resource set parameters include:
high-layer parameters related to control resource set or SRS resource set index.

22. The user equipment according to any one of claims 16 to 20, wherein the priority information includes at least one of the following:
a priority index, a first high-layer parameter, and a second high-layer parameter; wherein the first high-layer parameter is used to indicate that a priority of dynamic grant is lower than a priority of configured grant, and the second high-layer parameter is used to indicate that a priority of dynamic grant is higher than the priority of the configured grant.

23. The user equipment according to claim 16, wherein the parameter information includes resource set information and a transmission scheme of each PUSCH, and the resource set information includes an SRS resource set associated with each PUSCH;
the determining N PUSCHs for transmission from the multiple PUSCHs which are overlapped based on the parameter information, includes:
when a fifth PUSCH among the multiple PUSCHs overlap with those of other PUSCHs in time, selecting the fifth PUSCH for transmission; wherein the fifth PUSCH is associated with at least two SRS resource sets, and the fifth PUSCH is configured for SDM transmission or SFN transmission, and the other PUSCHs are PUSCHs among the multiple PUSCHs except the fifth PUSCH.

24. The user equipment according to claim 16, wherein when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

25. The user equipment according to any one of claims 16 to 20, wherein the multiple PUSCHs include at least one of the following:
at least one DG-PUSCH and at least one CG-PUSCH.

26. The user equipment according to any one of claims 16 to 20, wherein the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

27. The user equipment according to any one of claims 16 to 20, wherein the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
wherein the uplink transmission includes at least one of the following: PUSCH and PUCCH.

28. The user equipment according to any one of claims 16 to 20, wherein after selecting N PUSCHs for transmission from the multiple PUSCHs, the device further includes at least one of the following:
performing overlapping processing of uplink transmissions with the same priority;
performing overlapping processing of uplink transmissions with different priorities; or
performing overlap processing of uplink transmission;
wherein the uplink transmission includes at least one of the following: PUSCH and PUCCH.

29. The user equipment according to any one of claims 16 to 20, wherein the processor is further used to:
transmit a sixth PUSCH;
wherein a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

30. The user equipment according to any one of claims 16 to 20, wherein the processor is further used to:
select, according to a third selection rule, PUSCH for UCI multiplexing transmission; wherein the third selection rule includes at least one of the following:
PUSCHs that overlap in time in a cell are as a whole for selection;
at least one PUSCH is selected for UCI multiplexing from PUSCHs associated with same resource set parameter as the UCI.

31. A user equipment (UE), comprising:
an obtaining unit used to obtain parameter information corresponding to multiple physical uplink shared channels (PUSCH), respectively; wherein the parameter information includes at least one of the following: resource set information, number of transmission layers, priority information, or transmission scheme;
a transmission unit used to determine N PUSCHs for transmission from the multiple PUSCHs which are overlapped based on the parameter information; wherein N is an integer greater than or equal to 1.

32. The user equipment according to claim 31, wherein the parameter information includes: resource set information and priority information corresponding to each PUSCH; and the resource set information includes resource set parameters associated with each PUSCH in the multiple PUSCHs;
the transmission unit is used to select based on the parameter information and according to a first selection rule, N PUSCHs from the multiple PUSCHs for transmission; wherein the first selection rule includes at least one of the following:
selecting PUSCH with a highest priority for transmission from PUSCHs associated with each resource set parameter, respectively;
selecting a first PUSCH with a highest priority for transmission from the multiple PUSCHs, and selecting a second PUSCH with a highest priority for transmission from PUSCHs associated with other resource set parameter; wherein the other resource set parameter is a resource set parameter other than the resource set parameter associated with the first PUSCH;
selecting N PUSCHs from PUSCHs of a first priority for transmission; wherein when N is greater than 1, resource set parameters associated with the N PUSCHs are different, and the first priority is the highest priority among priorities of the multiple PUSCHs;
selecting N1 PUSCHs from PUSCHs of a first priority for transmission, and determining at most N-N1 PUSCHs for transmission according to a resource set parameter;
wherein the first priority is the highest priority among priorities of the multiple PUSCHs, and N1 is an integer less than N and greater than 1;
maximizing the number of selected PUSCHs; or
maximizing a sum of priority indices of selected PUSCHs.

33. The user equipment according to claim 31, wherein the parameter information includes resource set information and a number of transmission layers of each PUSCH, wherein the resource set information includes resource set parameters associated with each PUSCH in the multiple PUSCHs;
the transmission unit is used to determine based on the parameter information and according to a second selection rule, N PUSCHs from the multiple PUSCHs for transmission; wherein the second selection rule includes at least one of the following:
selected PUSCH associated with different parameter information, maximizing the number of selected PUSCHs, a total number of transmission layers of selected PUSCHs not exceed UE's transmission capability, or maximizing the total number of transmission layers of selected PUSCHs.

34. The user equipment according to claim 33, wherein the second selection rule includes multiple items of: maximizing the number of selected PUSCHs, the total number of transmission layers of selected PUSCHs not exceeding the transmission capability of the user equipment, or maximizing the total number of transmission layers of selected PUSCHs;
the transmission unit is used to select N PUSCHs for transmission from the multiple PUSCHs, based on the parameter information and according to the second selection rule as well as a predefined order of multiple items included in the second selection rule.

35. The user equipment according to claim 31, wherein the parameter information includes: resource set information, the number of transmission layers of each PUSCH and priority information corresponding to each PUSCH; and the resource set information includes resource set parameters associated with each PUSCH in the multiple PUSCHs;
the transmission unit is used to select, based on the parameter information, a third PUSCH for transmission from the multiple PUSCHs, and select a fourth PUSCH for transmission from the multiple PUSCHs;
wherein the third PUSCH includes at least one of the following:
PUSCH with the highest priority;
PUSCH with a resource set parameter of a specific value;
PUSCH with a number of transmission layers of a specific value; or
PUSCH with a specific type;
wherein the fourth PUSCH satisfies a target condition, and the target condition includes at least one of the following conditions:
being different from resource set parameters associated with the third PUSCH;
the number of transmission layers not exceeding a first value, wherein the first value is determined based on the UE's transmission capability;
a total number of transmission layers of the fourth PUSCH and third PUSCH not exceeding the UE's transmission capability; or
PUSCH with highest priority among the multiple PUSCHs other than the third PUSCH.

36. The user equipment according to any one of claims 33 to 35, wherein the resource set parameters include:
high-layer parameters related to control resource set or SRS resource set index.

37. The user equipment according to any one of claims 31 to 35, wherein the priority information includes at least one of the following:
a priority index, a first high-layer parameter, and a second high-layer parameter; wherein the first high-layer parameter is used to indicate that a priority of dynamic grant is lower than a priority of configured grant, and the second high-layer parameter is used to indicate that a priority of dynamic grant is higher than the priority of the configured grant.

38. The user equipment according to claim 31, wherein the parameter information includes resource set information and a transmission scheme of each PUSCH, and the resource set information includes an SRS resource set associated with each PUSCH;
the transmission unit is used to, when a fifth PUSCH among the multiple PUSCHs overlap with those of other PUSCHs in time, select the fifth PUSCH for transmission; wherein the fifth PUSCH is associated with at least two SRS resource sets, and the fifth PUSCH is configured for SDM transmission or SFN transmission, and the other PUSCHs are PUSCHs among the multiple PUSCHs except the fifth PUSCH.

39. The user equipment according to claim 31, wherein when N is greater than 1, the N PUSCHs satisfy at least one of the following:
N PUSCHs are associated with different high-layer parameters related to control resource sets;
N PUSCHs are associated with different SRS resource sets;
a total number of transmission layers of the N PUSCHs does not exceed the UE's transmission capability;
N PUSCHs have different priority indexes;
N PUSCHs have different PUSCH types;
each of N PUSCHs has a single transmission configuration indication (TCI) state;
each of N PUSCHs is not configured with SDM transmission or SFN transmission.

40. The user equipment according to any one of claims 31 to 35, wherein the multiple PUSCHs include at least one of the following:
at least one DG-PUSCH and at least one CG-PUSCH.

41. The user equipment according to any one of claims 31 to 35, wherein the multiple PUSCHs include at least one of the following:
multiple PUSCHs after performing overlapping processing of PUSCHs and physical uplink control channel (PUCCH);
multiple PUSCHs after performing overlapping processing of PUCCHs;
multiple PUSCHs before performing overlapping processing of PUCCHs;
multiple PUSCHs after performing overlapping processing of PUSCHs and PUCCHs with different priorities.

42. The user equipment according to any one of claims 31 to 35, wherein the multiple PUSCHs include at least one of the following:
multiple PUSCHs before performing overlapping processing of uplink transmissions with the same priority;
multiple PUSCHs after performing overlapping processing of uplink transmissions with the same priority;
multiple PUSCHs before performing overlapping processing of uplink transmissions with different priorities;
multiple PUSCHs after performing overlapping processing of uplink transmissions with different priorities;
wherein the uplink transmission includes at least one of the following: PUSCH and PUCCH.

43. The user equipment according to any one of claims 31 to 35, wherein after selecting N PUSCHs for transmission from the multiple PUSCHs, the device further includes at least one of the following:
a first execution unit used to perform overlapping processing of uplink transmissions with the same priority;
a second execution unit used to perform overlapping processing of uplink transmissions with different priorities; or
a third execution unit used to perform overlap processing of uplink transmission;
wherein the uplink transmission includes at least one of the following: PUSCH and PUCCH.

44. The user equipment according to any one of claims 31 to 35, wherein the device further includes:
a second transmission unit used to transmit a sixth PUSCH;
wherein a starting symbol of the sixth PUSCH is later than an ending symbol of a first physical downlink control channel (PDCCH), and a difference between the starting symbol of the sixth PUSCH and the ending symbol of the first PDCCH is equal to or greater than PUSCH preparation time; and the first PDCCH includes: a later PDCCH among PDCCHs received by the user equipment for scheduling or activating PUSCH; and/or,
a starting symbol of the sixth PUSCH is later than an ending symbol of the second PDCCH, and a difference between the starting symbol of the sixth PUSCH and the ending symbol of the second PDCCH is equal to or greater than PUSCH preparation time; and the second PDCCH includes: PDCCH received by the user equipment for scheduling or activating a seventh PUSCH, and control resource set parameters of the seventh PUSCH are the same as those of the sixth PUSCH.

45. The user equipment according to any one of claims 31 to 35, wherein the device further includes:
a selection unit used to select, according to a third selection rule, PUSCH for UCI multiplexing transmission; wherein the third selection rule includes at least one of the following:
PUSCHs that overlap in time in a cell are as a whole for selection;
at least one PUSCH is selected for UCI multiplexing from PUSCHs associated with same resource set parameter as the UCI.

46. A processor-readable storage medium, comprising a computer program stored thereon; wherein the computer program is used to cause a processor to execute the uplink transmission method according to any one of claims 1 to 15.
